# EUROPEAN PATENT SPECIFICATION

(11) **EP 4 080 835 B1**
(45) Date of publication and mention of the grant of the patent: **22.04.2026**
(21) Application number: 21744993.3
(22) Date of filing: 22.01.2021
(51) Int. Cl.: H04L 45/28, H04L 45/50, H04L 45/247, H04L 45/00

(54) **PACKET PROCESSING METHOD, APPARATUS AND SYSTEM**
PAKETVERARBEITUNGSVERFAHREN, -VORRICHTUNG UND -SYSTEM
PROCÉDÉ, APPAREIL ET SYSTÈME DE TRAITEMENT DE PAQUETS

(30) Priority: 22.01.2020 CN 202010075789; 23.03.2020 CN 202010209455
(43) Date of publication of application: 26.10.2022
(73) Proprietor: Huawei Technologies Co., Ltd., Shenzhen, Guangdong 518129, (CN)
(72) Inventor: HU, Zhibo, Shenzhen, Guangdong 518129 (CN); FANG, Sheng, Shenzhen, Guangdong 518129 (CN); WEN, Huizhi, Shenzhen, Guangdong 518129 (CN); XIAO, Yaqun, Shenzhen, Guangdong 518129 (CN); YAN, Gang, Shenzhen, Guangdong 518129 (CN)
(74) Representative: Maiwald GmbH
(86) International application number: PCT/CN2021/073431
(87) International publication number: WO 2021/148021

(56) References cited:
- EP-A1- 3 731 469
- CN-A- 105 282 028
- CN-A- 105 790 996
- CN-A- 110 661 700
- CN-A- 110 661 700
- US-A1- 2015 109 902
- US-A1- 2015 256 456
- US-B1- 9 794 148
- WEINMILLER DIPL.-ING JOST: "Grouping Wireless Picocells to build a Local Area Wireless Infrastructure Fast and efficient Local Mobility Management and Range Extension E-WLAN BS BS BS Distribution Wireless Pico-Cell Portal System Shared Resources Other Networks", 31 January 1999 (1999-01-31), pages 1 - 169, XP093043058, Retrieved from the Internet <URL:https://www.researchgate.net/profile/Jost_Weinmiller/publication/2775241_Grouping_Wireless_Picocells_with_a_Distribution_System/links/0deec53a1c5dd2135c000000/Grouping-Wireless-Picocells-with-a-Distribution-System.pdf> [retrieved on 20230501]
- FILSFILS CISCO SYSTEMS C ET AL: "SRv6 Network Programming; draft-filsfils-spring-srv6-network-programming-03.txt", SRV6 NETWORK PROGRAMMING; DRAFT-FILSFILS-SPRING-SRV6-NETWORK-PROGRAMMING-03.TXT; INTERNET-DRAFT: SPRING, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 3, 22 December 2017 (2017-12-22), pages 1 - 53, XP015124900

## Description

### TECHNICAL FIELD

This application relates to the communications field, and in particular, to a packet processing method, apparatus, and system.

### BACKGROUND

US2015/109902A1 describes a method comprises selecting, by an ingress provider edge router, one of first or second provider edge routers as a primary router for reaching a destination via a core network, and selecting the other of the first or second provider edge routers as a backup router for reaching the destination via the core network; and inserting, into an IPv6 data packet destined for the destination, a primary label assigned by the primary router and a repair label assigned by backup router, and an IPv6 extension header specifying first and second segment identifiers associated with the respective first and second provider edge routers and a protected flag that enables fast rerouting of the IPv6 data packet to the backup router if the primary router is unavailable.

Segment routing (segment routing, SR) is a protocol designed based on source routing to control forwarding of a data packet in a network. The SR is used to divide a network path into segments, allocate segment identifiers to the segments or nodes, and add the segment identifiers that are arranged sequentially to a data packet, so that the data packet can be transmitted through a forwarding path indicated by the segment identifiers. In an SR network, an ingress device of the segment routing network inserts a group of ordered segment identifiers into a data packet to explicitly specify a forwarding path of the data packet. The ingress device may also be referred to as a head node. SR applied to a multi-protocol label switching (multi-protocol label switching, MPLS) data plane is referred to as segment routing MPLS (MPLS-SR or SR-MPLS). SR applied to an Internet protocol version 6 (Internet Protocol Version 6, IPv6) data plane is referred to as segment routing IPv6 (SRv6).

Ahead node (Head Node) is a start node on an SR forwarding path. In SRv6, the head node is responsible for encapsulating a segment routing header (segment routing header, SRH). In SR-MPLS, the head node is responsible for encapsulating a SID label into an MPLS packet header.

A tail node is a last-hop network device on an SR forwarding path. In SRv6, the tail node is responsible for decapsulating an SRH and/or an IPv6 header.

An intermediate node is a network device that is not a head node or a tail node on an SR forwarding path, and may be referred to as a transit node.

A segment identifier (segment ID, SID) represents a node, a link, or a service provided by a network device. In SRv6, the SID is represented as a 128-bit value. In SR-MPLS, the SID is represented as a label value. An SRv6 segment identifier may include a function part, and the function part indicates a corresponding action that needs to be performed by a network device advertising the segment identifier. For any node in an SR network, the node may include an endpoint layer-3 cross-connect segment identifier (End.X SID, where End stands for endpoint, which indicates an endpoint; X stands for crossing, which indicates layer-3 cross-connect; and SID indicates a segment identifier) or an endpoint segment identifier corresponding to at least one node (End SID, where End stands for endpoint, which indicates an endpoint; and SID indicates a segment identifier). The End.X SID is used to identify an IP-layer link directly connected to the node, and the End SID is used to identify the node.

A segment identifier SID list is a list including one or more segment identifiers. After receiving a data packet, a head node in a segment routing network may insert the SID list into the data packet to indicate a forwarding path. A SID list may include only one SID, or may include a plurality of SIDs. It should be noted that the SID list may indicate only some nodes on the path instead of all nodes. Alternatively, an END.X SID, an END SID, and a SID having another function may be used together. The SIDs in the SID list are executed in sequence, to ensure that the packet can be forwarded along the specified forwarding path. After the head node inserts the SID list into the packet and sends the packet, when the forwarding path indicated by the SID list is faulty, a packet sending delay may be long or the packet may be lost, and therefore reliability of the segment routing network is low.

### SUMMARY

This application provides a packet processing method, apparatus, and system, to implement that, in a segment routing network, when a forwarding path indicated by a segment identifier list is faulty, data packet forwarding processing can still be implemented in the segment routing network, thereby improving reliability of the segment routing network.

Appended claim 1 defines a packet processing method. Appended claim 18 defines a network device. Appended claim 19 defines a network system. The invention and its scope of protection is defined by these independent claims. The following aspects and implementation proivde examples of how technical subject matetrs can be combined.

According to a first aspect, this application provides a packet processing method, applied to a segment routing network. In the method, a first network device receives a first packet, where the first packet includes a plurality of segment identifier SID lists, the plurality of SID lists include a primary SID list and at least one secondary SID list, the at least one secondary SID list includes a first secondary SID list, and the first secondary SID list is a backup of the primary SID list; and the first network device processes the first packet based on the primary SID list. Because the first secondary SID list in the first packet is a backup of the primary SID list, when a path indicated by or a service corresponding to the primary SID list is faulty, the first packet may be processed based on the first secondary SID list, so that forwarding processing of the data packet continues in the segment routing network, thereby improving network transmission reliability.

In a possible implementation, the primary SID list includes only one SID, and the first secondary SID list also includes only one SID. In this way, a length of the primary SID list and a length of the first secondary SID list may be reduced, to further reduce a length of a packet header of the first packet, so as to reduce transmission resources.

In another possible implementation, the first network device performs different processing on the first packet based on whether a target SID is available, where the target SID is one or more unexecuted SIDs in the primary SID list.

In another possible implementation, the target SID being available includes that a service corresponding to the target SID is available, or the target SID is reachable for the first network device. In this way, whether the target SID is available is determined by determining whether the service corresponding to the target SID is available or whether the target SID is reachable for the first network device.

In the foregoing, availability of one or more target SIDs is determined, so that a secondary SID list may be used to provide a service or perform packet forwarding when whether the target SID is available is determined in advance, thereby improving reliability of the segment routing network.

In another possible implementation, a forwarding path indicated by the first secondary SID list is a backup path of a forwarding path indicated by the primary SID list. In this way, when the forwarding path indicated by the primary SID list is faulty, the forwarding path indicated by the first secondary SID list may be used to transmit the first packet, so that forwarding processing of the data packet continues in the segment routing network, thereby improving network transmission reliability.

In another possible implementation, when the target SID is unavailable, the first network device sends the first packet based on a first SID, where the first SID is the 1^{st} SID in the first secondary SID list. Because the target SID is a SID in the primary SID list, when the target SID is unavailable, the packet is sent based on the 1^{st} SID in the first secondary SID list, to ensure that forwarding processing of the data packet continues in the segment routing network, so as to improve network transmission reliability.

In another possible implementation, the target SID being unreachable includes that a network device corresponding to the target SID is unreachable for the first network device, or any network device or link between the first network device and a network device corresponding to the target SID is faulty. In this way, whether the target SID is reachable may be determined by determining whether the network device corresponding to the target SID is reachable for the first network device, or whether any network device or link between the first network device and the network device corresponding to the target SID is faulty.

In another possible implementation, the first network device is an intermediate node on an end-to-end primary forwarding path indicated by the plurality of SID lists, the target SID is the last SID in the primary SID list, and the target SID is a SID of the first network device. When the target SID is reachable, the first network device sends the first packet based on a first SID, where the first SID is the 1^{st} SID after the at least one secondary SID list in the plurality of SID lists. When the target SID is reachable, it indicates that the forwarding path indicated by the primary SID list is not faulty, and because the first network device is an intermediate node on the primary forwarding path, the first packet is sent based on the first SID, so that the first network device skips the at least one secondary SID list, and continues to send the first packet.

In another possible implementation, the first network device is a tail node on an end-to-end primary forwarding path indicated by the plurality of SID lists, the target SID is the last SID in the primary SID list, and the target SID is a SID of the first network device. When the target SID is reachable, the first network device performs a function corresponding to the target SID, and strips the plurality of SID lists. When the target SID is reachable, it indicates that the primary forwarding path indicated by the primary SID list is not faulty, and because the first network device is the tail node on the primary forwarding path, the plurality of SID lists are stripped, so that the first network device directly skips the at least one secondary SID list. This avoids a scenario in which packet processing cannot contimue due to a falut of the tail node. In addition, when the tail node processes the packet, and there is still at least one SID in the segment identifier list of the packet, namely, a SID in the secondary SID list, the SID lists may be quickly stripped, to improve a packet processing speed.

In another possible implementation, a service corresponding to the first secondary SID list is a backup of a service corresponding to the primary SID list, and the target SID being available includes that a service corresponding to the target SID is available. In this way, when the service corresponding to the primary SID list is faulty, the service corresponding to the first secondary SID list may be used to process the first packet, so that processing of the data packet continues in the segment routing network, thereby improving network transmission reliability.

In another possible implementation, when the target SID is unavailable, the first network device provides a service for the first packet by using a first SID, where the first SID is the 1^{st} SID in the first secondary SID list. When the target SID is unavailable, that is, the service corresponding to the target SID is unavailable, the service is provided for the first packet based on the first SID in the first secondary SID list, so that processing of the data packet continues in the segment routing network, thereby improving network availability.

In another possible implementation, the service corresponding to the target SID being unavailable includes: a resource of the service is insufficient, or the resource is occupied; or the service is faulty. Therefore, whether the service corresponding to the target SID is available is determined by determining whether the resource of the service is sufficient, whether the resource is occupied, or whether the service is faulty.

In another possible implementation, the first network device is an intermediate node on an end-to-end primary forwarding path indicated by the plurality of SID lists, and the target SID is the 1^{st} SID in the unexecuted SIDs. When the target SID is available, the first network device provides the service corresponding to the target SID, and sends the first packet based on a first SID, where the first SID is the 1^{st} SID after the at least one secondary SID list in the plurality of SID lists. When the target SID is available, and the first SID is the 1^{st} SID after the at least one secondary SID list in the plurality of SID lists, the packet is sent based on the first SID, so that the first network device directly skips the at least one secondary SID list. The network device does not need to continue to process the packet based on the at least one secondary SID list, to avoid problems of repeated processing and low forwarding efficiency caused by the processing.

In another possible implementation, the first network device is a tail node on an end-to-end primary forwarding path indicated by the plurality of SID lists, and the target SID is the last SID in the unexecuted SIDs. When the target SID is available, the first network device provides the service corresponding to the target SID, and strips the plurality of SID lists. Because the first network device is the tail node on the primary forwarding path, when the target SID is available, the plurality of SID lists are stripped, so that the first network device directly skips the at least one secondary SID list.

This avoids a scenario in which packet processing cannot contimue due to a falut of the tail node. In addition, when the tail node processes the packet, and there is still at least one SID in the segment identifier list of the packet, namely, a SID in the secondary SID list, the SID lists may be quickly stripped, to improve a packet processing speed. In a manner of directly stripping the SID lists by using the SID, excessive indication information and the like carried in the packet can be reduced, to improve availability of this solution, and reduce network overheads.

In another possible implementation, the first packet includes location indication information. In this way, the first network device obtains the first SID based on the location indication information, and the location indication information is used to indicate one or more of the following: a location of the primary SID list in the plurality of SID lists, a location of the first secondary SID list in the plurality of SID lists, and a location of the at least one secondary SID list in the plurality of SIDs. In this way, the first network device may accurately obtain the first secondary SID list from the plurality of SID lists based on the location information, to accurately obtain the first SID.

In a manner of carrying the location indication information in the SID, the network device may obtain accurate location information based on the SID in a plurality of application scenarios, so that a SID in the primary SID list or a SID in the at least one secondary SID list may be accurately skipped based on whether the target SID is available, to ensure accurate processing of the packet in the network without repeatedly processing the packet.

In another possible implementation, the location indication information includes the last SID in the primary SID list and/or the 1^{st} SID in the unexecuted SIDs in the primary SID list.

In a manner of carrying the location indication information in the SID, packet processing efficiency of the network device can be improved, and excessive indication information and the like carried in the packet can be reduced, to improve availability of this solution, and reduce network overheads.

In another possible implementation, the location indication information is carried in metadata of a segment routing header of the first packet.

In another possible implementation, the location indication information includes a quantity of SIDs in the M secondary SID lists.

In another possible implementation, the location indication information includes a location of the tail SID of the primary SID list in the plurality of SID lists.

In another possible implementation, the location indication information includes a location of the head SID of the first secondary SID list in the plurality of SID lists.

In another possible implementation, the location indication information includes a location of the head SID of the primary SID list in the plurality of SID lists and a quantity of SIDs in the primary SID list.

In a manner of carrying the location indication information in the packet, packet processing efficiency of the network device can be improved.

In another possible implementation, the first network device receives a configuration instruction; and the first network device performs, based on the configuration instruction, an action of obtaining a second SID based on whether the target SID is available, and processes the first packet based on the second SID, where the second SID includes: the SID in the primary SID list, the 1^{st} SID in the first secondary SID list, or the 1^{st} SID after the at least one secondary SID list in the plurality of SID lists. In this way, whether the first network device enables a function of processing the first packet based on the target SID may be controlled by using the configuration instruction. In another possible implementation, the plurality of SID lists are in a segment routing header SRH of the first packet, or the plurality of SID lists are in a multi-protocol label switching header of the first packet.

In another possible implementation, the primary SID list and the first secondary SID list are in different SRHs of the first packet.

In another possible implementation, the primary SID list is adjacent to the first secondary SID list, and the last SID in the primary SID list is before the first secondary SID list. In this way, the first network device can determine the location of the primary SID list and the location of the first secondary SID list. In addition, a solution of a related technology is used to a maximum extent, so that the packet in the network can be correctly processed, thereby reducing difficulty in using the technical solution in this application.

In another possible implementation, the at least one secondary SID list further includes a second secondary SID list, and the second secondary SID list is a backup of the first secondary SID list and/or the second secondary SID list is a backup of the primary SID list. In this way, the first packet may include a plurality of primary SID lists and a secondary SID list corresponding to each primary SID list, and each primary SID list is protected by using the secondary SID list corresponding to each primary SID list, to further improve reliability of the segment routing network.

In another possible implementation, the plurality of SID lists further includes another primary SID list and another secondary SID list, and the another secondary SID list is a backup of the another primary SID list. When a plurality of important network nodes or services in the network need to be protected, the packet may carry more primary and secondary SID lists to further improve network reliability.

According to a second aspect, this application provides a packet processing method, applied to a segment routing network. In the method, a first network device sends a first packet, where the first packet includes a plurality of segment identifier SID lists, the plurality of SID lists include at least a primary SID list and at least one secondary SID list, the at least one secondary SID list includes a first secondary SID list, and the first secondary SID list is a backup of the primary SID list. Because the first secondary SID list in the first packet is a backup of the primary SID list, when a path indicated the primary SID list is faulty, the first packet is processed based on the first secondary SID list, so that forwarding processing of the data packet continues in the segment routing network, thereby improving network transmission reliability.

In a possible implementation, the first network device receives a second packet, and generates the first packet based on the second packet, where the second packet does not include the plurality of SID lists. Alternatively, the first network device generates the first packet.

In a possible implementation, before sending the first packet, the first network device further obtains the plurality of segment identifier lists.

In another possible implementation, the first packet includes location indication information, and the location indication information is used to indicate one or more of the following: a location of the primary SID list in the plurality of SID lists, a location of the first secondary SID list in the plurality of SID lists, and a location of the at least one secondary SID list in the plurality of SID lists. In this way, the location of the primary SID list or the secondary SID list in the plurality of SID lists can be accurately determined by using the location information.

In another possible implementation, the location indication information includes the last SID in the primary SID list and/or the 1^{st} SID in unexecuted SIDs in the primary SID list.

In another possible implementation, the location indication information is carried in metadata of a segment routing header of the first packet. In this way, the location information is carried by using the metadata, so that a network device located after the first network device can obtain the location information from the first packet.

In another possible implementation, the plurality of SID lists are carried in a segment routing header SRH of the first packet, or the plurality of SID lists are carried in a multi-protocol label switching MPLS header of the first packet.

In another possible implementation, the primary SID list and the first secondary SID list are carried in different SRHs of the second packet.

In another possible implementation, the primary SID list is adjacent to the first secondary SID list, and the last SID in the primary SID list is before the first secondary SID list. In this way, the network device located after the first network device can determine the location of the primary SID list and the location of the first secondary SID list.

In another possible implementation, the at least one secondary SID list further includes a second secondary SID list, and the second secondary SID list is a backup of the first secondary SID list and/or the second secondary SID list is a backup of the primary SID list. Because the second secondary SID list is a backup of the first secondary SID list, when a path indicated by the first secondary SID list is faulty, the first packet is processed based on the second secondary SID list, so that forwarding processing of the data packet continues in the segment routing network, thereby improving network transmission reliability.

In another possible implementation, the plurality of SID lists further includes another primary SID list and another secondary SID list, and the another secondary SID list is a backup of the another primary SID list.

According to a third aspect, this application provides a packet processing method, applied to a segment routing network. In the method, a control device sends a first message to a first network device, where the first message includes a plurality of segment identifier SID lists, the plurality of SID lists include a primary SID list and at least one secondary SID list, the at least one secondary SID list includes a first secondary SID list, and the first secondary SID list is a backup of the primary SID list. The first message enables the first network device to generate a first packet, and the first packet includes the plurality of SID lists. The first packet thus generated includes the primary SID list and the first secondary SID list. Because the first secondary SID list is a backup of the primary SID list, when a path indicated by the primary SID list is faulty, the first network device processes the first packet based on the first secondary SID list, so that forwarding processing of the data packet continues in the segment routing network, thereby improving network transmission reliability.

In a possible implementation, the first message further includes a packet feature or a routing feature, and the first packet conforms to the packet feature or the routing feature. In this way, the first network device may add the primary SID list and the first secondary SID list to the packet that conforms to the packet feature and the routing feature.

In another possible implementation, the first message further includes location indication information, and the location indication information is used to indicate one or more of the following: a location of the primary SID list in the plurality of SID lists, a location of the first secondary SID list in the plurality of SID lists, and a location of the at least one secondary SID list in the plurality of SIDs. In this way, the network device in the segment routing network can accurately determine the locations of the primary SID list and each secondary SID list based on the location indication information.

In another possible implementation, the location indication information includes the last SID in the primary SID list and/or the 1^{st} SID in unexecuted SIDs in the primary SID list.

According to a fourth aspect, this application provides a packet processing apparatus, configured to perform the method in the first aspect or any possible implementation of the first aspect. Specifically, the apparatus includes units configured to perform the method in the first aspect or any possible implementation of the first aspect.

According to a fifth aspect, this application provides a packet processing apparatus, configured to perform the method in the second aspect or any possible implementation of the second aspect. Specifically, the apparatus includes units configured to perform the method in the second aspect or any possible implementation of the second aspect.

According to a sixth aspect, this application provides a packet processing apparatus, configured to perform the method in the third aspect or any possible implementation of the third aspect. Specifically, the apparatus includes units configured to perform the method in the third aspect or any possible implementation of the third aspect.

According to a seventh aspect, this application provides a packet processing apparatus. The apparatus includes a processor, a memory, and a transceiver. The processor, the memory, and the transceiver may be connected by using a bus system. The memory is configured to store one or more programs, and the processor is configured to execute the one or more programs in the memory, so that the apparatus is enabled to complete the method in the first aspect or any possible implementation of the first aspect.

According to an eighth aspect, this application provides a packet processing apparatus. The apparatus includes a processor, a memory, and a transceiver. The processor, the memory, and the transceiver may be connected by using a bus system. The memory is configured to store one or more programs, and the processor is configured to execute the one or more programs in the memory, so that the apparatus is enabled to complete the method in the second aspect or any possible implementation of the second aspect.

According to a ninth aspect, this application provides a packet processing apparatus. The apparatus includes a processor, a memory, and a transceiver. The processor, the memory, and the transceiver may be connected by using a bus system. The memory is configured to store one or more programs, and the processor is configured to execute the one or more programs in the memory, so that the apparatus is enabled to complete the method in the third aspect or any possible implementation of the third aspect.

According to a tenth aspect, this application provides a computer-readable storage medium. The computer-readable storage medium stores program code. When the program code is run on a computer, the computer is enabled to perform the method in the first aspect, the second aspect, the third aspect, any possible implementation of the first aspect, any possible implementation of the second aspect, or any possible implementation of the third aspect.

According to an eleventh aspect, this application provides a computer program product including program code. When the computer program product runs on a computer, the computer is enabled to perform the method in the first aspect, the second aspect, the third aspect, any possible implementation of the first aspect, any possible implementation of the second aspect, or any possible implementation of the third aspect.

According to a twelfth aspect, this application provides a packet processing system. The system includes the apparatus according to the fourth aspect and the apparatus according to the fifth aspect. Alternatively, the system includes the apparatus according to the seventh aspect and the apparatus according to the eighth aspect.

In a possible implementation, the system further includes the apparatus according to the sixth aspect or the apparatus according to the ninth aspect.

### BRIEF DESCRIPTION OF DRAWINGS

FIG. 1 is a schematic diagram of an architecture of a communications network according to an embodiment of this application;
FIG. 2 is a schematic diagram of a structure of another communications network according to an embodiment of this application;
FIG. 3 is a schematic flowchart of a packet processing method according to an embodiment of this application;
FIG. 4 is a schematic diagram of a specific application of a method procedure according to an embodiment of this application;
FIG. 5 is a schematic diagram of a format of a type length value according to an embodiment of this application;
FIG. 6 is a schematic diagram of a format of a segment routing header according to an embodiment of this application;
FIG. 7 is a schematic diagram of a specific application of a method procedure according to an embodiment of this application;
FIG. 8 is a schematic diagram of a specific application of another method procedure according to an embodiment of this application;
FIG. 9 is a schematic diagram of a specific application of another method procedure according to an embodiment of this application;
FIG. 10 is a schematic diagram of a specific application of another method procedure according to an embodiment of this application;
FIG. 11 is a schematic diagram of a specific application of another method procedure according to an embodiment of this application;
FIG. 12 is a schematic diagram of a structure of a packet processing apparatus according to an embodiment of this application;
FIG. 13 is a schematic diagram of a structure of another packet processing apparatus according to an embodiment of this application;
FIG. 14 is a schematic diagram of a structure of another packet processing apparatus according to an embodiment of this application;
FIG. 15 is a schematic diagram of a structure of another packet processing apparatus according to an embodiment of this application;
FIG. 16 is a schematic diagram of a structure of another packet processing apparatus according to an embodiment of this application;
FIG. 17 is a schematic diagram of a structure of another packet processing apparatus according to an embodiment of this application;
FIG. 18 is a schematic diagram of a structure of another packet processing apparatus according to an embodiment of this application;
FIG. 19 is a schematic diagram of a structure of a packet processing system according to an embodiment of this application; and
FIG. 20 is a schematic diagram of a structure of another packet processing system according to an embodiment of this application.

### DESCRIPTION OF EMBODIMENTS

The following further describes embodiments of this application in detail with reference to the accompanying drawings.

Terms included in this application are explained below.

Segment routing header (segment routing header, SRH): An Internet protocol version 6 (Internet protocol version 6, IPv6) packet includes an IPv6 standard header, extension headers (0...n), and a payload (Payload). To implement SRv6 based on an IPv6 forwarding plane, a new IPv6 extension header is added, which is referred to as an SRH extension header. The extension header specifies an IPv6 path and stores a plurality of SIDs of IPv6. The plurality of SIDs may form a segment list (Segment List), and the segment list has a same function as a segment list in segment routing multi-protocol label switching (segment routing multi-protocol label switching, SR-MPLS). A head node adds one or more SRH extension headers to the IPv6 packet, so that an intermediate node may forward the IPv6 packet based on path information included in the SRH extension headers. For example, when forwarding the IPv6 packet, a network device that supports SRv6 queries a local segment identifier table (local SID table) based on a destination address (destination address, DA) in the data packet. When the destination address in the data packet matches any SID in the local segment identifier table, according to a SID-related policy or function in the local segment identifier table, an operation corresponding to the policy or function is performed. For example, the operation corresponding to the policy may be forwarding the data packet through an outbound interface specified by the SID. If the destination address in the packet does not match any SID in the local segment identifier table, an IPv6 routing and forwarding table is further queried, and longest-match forwarding is performed based on the IPv6 routing and forwarding table.

A policy or function corresponding to a SID includes a forwarding path and/or a corresponding service. The forwarding path may include the End SID and the End.X SID in the background, or another SID having a forwarding or table lookup function. The service corresponding to the SID may include a function provided by a network device, for example, compression processing or encryption processing, or another function provided by another device connected through the network device, for example, services such as anti-attack filtering and traffic cleaning provided by using a connected firewall. In the foregoing, there is also a case in which a SID corresponds to both a forwarding path and a service. A network device only needs to perform operation processing on a packet based on a function corresponding to the SID. In other words, the SID may be used to indicate the network device corresponding to the SID to perform a corresponding processing operation on the packet based on the SID.

In embodiments of this application, the head node may insert one or more segment identifier SID lists into the packet, and the SID lists include at least two SIDs. The one or more SID lists may be logically divided into a primary SID list and a secondary SID list. When there are still other SIDs in the one or more SID lists that do not belong to the two lists, these SIDs may further be divided as belonging to another SID list. In SRv6, a SID whose corresponding segment left (segment left, SL) has a smaller value in an SRH is considered to be after a SID whose corresponding SL has a larger value. When a segment identifier list is represented by (SID 1, SID 2, SID 3), it is considered that a front SID is before a back SID. For example, it is considered that the SID 1 is the 1^{st} SID in the segment identifier list, the SID 1 is adjacent to the SID 2, the SID 1 is before the SID 2, the SID 2 is adjacent to the SID 1 and the SID 3, the SID 2 is before the SID 3, and the SID 3 is adjacent to the SID 2. Correspondingly, the SID 2 is after the SID 1, and the SID 3 is after the SID 2.

Primary SID list: One or more SIDs to be protected and backed up in a SID list of a packet are referred to as a primary SID list. For example, when a segment identifier list is represented by (SID 1, SID 2, SID 3), and the SID 3 is a backup of the SID 2, that is, the SID 2 is a SID to be backed up, the SID 2 is considered as a primary SID list.

Secondary SID list: One or more SIDs for backup in a SID list of a packet are referred to as a secondary SID list. For example, when a segment identifier list is represented by (SID 1, SID 2, SID 3), and the SID 3 is a backup of the SID 2, the SID 3 is considered as a secondary SID list.

Unexecuted SID: In SRv6, a SID corresponding to a destination address and a following SID that are in a primary SID list are considered unexecuted SIDs. For example, the primary SID list is (SID 1, SID 2, SID 3). When a network device receives a packet, and a SID corresponding to a destination address of the packet is the SID 2, the unexecuted SIDs include the SID 2 and the SID 3. In SR-MPLS, because SIDs (namely, labels) in a segment identifier list are continuously popped, a primary segment identifier list at the top of a stack in an MPLS packet header may be considered as an unexecuted SID. For example, when a head node sends the packet to a next-hop device of the head node, and the primary segment identifier list is (SID 1, SID 2, SID 3), the unexecuted SIDs include the SID 1, the SID 2, and the SID 3. After the packet is processed by a network device corresponding to the SID 1, the primary segment identifier list may be changed to (SID 2, SID 3), and the unexecuted SIDs include the SID 2 and the SID 3.

A target SID is one or more of the foregoing unexecuted SIDs, that is, may be the SID 2, the SID 3, or both the SID 2 and the SID 3. Generally, the target SID may be the 1^{st} SID in the unexecuted SIDs, namely, the SID 2. A network device on a forwarding path indicated by the segment identifier list may determine reachability of the SID in the primary SID list by actively determining whether a network device corresponding to the target SID is reachable. Alternatively, when the target SID corresponds to a service, a network device corresponding to the target SID may determine availability of the service, to determine availability of the primary SID list.

Primary forwarding path: A forwarding path indicated by the foregoing primary SID list is referred to as a primary forwarding path, and the forwarding path may alternatively include only one network node.

Secondary forwarding path: A forwarding path indicated by the secondary SID list is referred to as a secondary forwarding path, and the forwarding path may alternatively include only one network node.

End-to-end primary forwarding path: A forwarding path corresponding to a primary segment identifier list or a forwarding path corresponding to a SID list other than a secondary SID list is referred to as an end-to-end primary forwarding path, and the forwarding path may alternatively include only one network node.

End-to-end secondary forwarding path: A forwarding path other than a path indicated by a primary SID list in SID lists is referred to as an end-to-end secondary forwarding path, and the forwarding path may alternatively include only one network node.

The following describes a definition of a SID by using an example. Refer to Table 1. A SID defined in SRv6 may include three parts, and the three parts include a locator (locator) part, a function (function) part, and an argument (Argument) part.

**Table 1**

| | | |
|---|---|---|
| Locator | Function | Argument |

The locator part is used to route a packet to a network device corresponding to the SID, to implement network addressing. The locator part has two important attributes: route and aggregation. A length of the locator part in the SID is variable.

The function part is used to represent an action to be performed by using an instruction, and is equivalent to operation code of a computing instruction. In the SRv6 network, any processing operation may be represented by the function part or the entire SID. Optionally, the function part in the SID is a random number allocated by a network device executing the instruction, and does not imply a specific function to be performed by using the instruction. Instead, the specific function to be performed by using the SID is determined by using the random number.

The argument part is an argument, a service, or any other related information required for instruction execution. For example, an instruction for fragmenting a packet is defined, and the argument part carries a fragment length of the packet. In the definition of the SRv6 SID, the argument part is also optional. In other words, the SID may not include the argument part.

In SR-MPLS, a SID is processed as a label, and a network device may also forward a packet or provide a corresponding service based on the label. Because SR-MPLS is similar to SRv6, details are not described herein again.

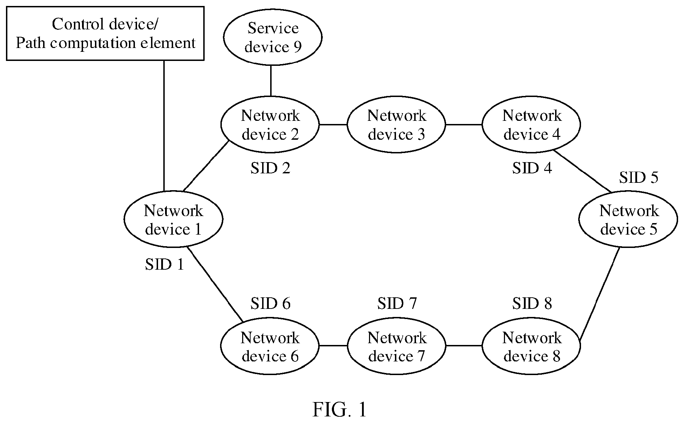

The following describes an application scenario of this application by using an example. FIG. 1 is a schematic diagram of a communications network according to an embodiment of this application. In the communications network shown in FIG. 1, network devices 1, 2, 3, 4, 5, 6, 7, and 8 are located in the same communications network. The communications network may be an SRv6 network, an SR-MPLS network, or the like. The network device 1 is connected to the network device 2 and the network device 6. The network device 2 is connected to a service device 9 and the network device 3. The network device 3 is connected to the network device 2 and the network device 4. The network device 4 is connected to the network device 3 and the network device 5. The network device 5 is connected to the network device 4 and the network device 8. The network device 8 is connected to the network device 5 and the network device 7. The network device 7 is connected to the network device 6 and the network device 8. In the network, optionally, there is a control device or a path computation element, and the control device or the path computation element may be connected to all the network devices. The network devices 1, 2, 3, 4, 5, 6, 7, and 8 may be router devices, or may be switches or any other devices having an SR function. A form of the device may be a physical apparatus device, or may be a virtualized device having an SR function. The network device 3 may be a device that supports the SR function or a device that does not support the SR function. In other words, in the SR network, not all devices need to support the SR function, and only a normal routing or switching function needs to be supported if the SR function is not supported. This is not specifically limited in this application.

A person skilled in the art may know that there may be more or fewer network devices in the communications network. For example, there may be dozens of, hundreds of, or more network devices. A quantity of network devices and a device type are not limited in embodiments of this application.

In the SR network, the network device 1 may be configured as a head node of a forwarding path of the network, and the network device 5 may be configured as a tail node of the forwarding path. The network device 1 includes a SID 1, the network device 2 includes a SID 2, the network device 4 includes a SID 4, the network device 5 includes a SID 5, the network device 6 includes a SID 6, the network device 7 includes a SID 7, and the network device 8 includes a SID 8. These SIDs include SIDs corresponding to forwarding nodes/paths, for example, the SID 4, the SID 5, the SID 6, the SID 7, and the SID 8, and further include a SID corresponding to a service, for example, the SID 2. The network device 2 may provide a corresponding service for a packet by using the SID 2, and the service may be packet compression or the like. The network device 2 may further send the packet to the service device 9 by using the SID 2, to provide a service for the packet, for example, traffic cleaning or virus filtering.

When the network device 2 provides a service for a received packet by using the service device 9, the network device 2 sends the packet to the service device 9. The service device 9 receives the packet, processes the packet based on a service provided by the service device 9, and sends a processed packet to the network device 2.

For example, it is assumed that the service device 9 is a firewall device, and the service provided by the firewall device 9 for a packet is performing anti-attack filtering on the packet. The network device 2 sends the packet to the firewall device 9. The firewall device 9 performs anti-attack filtering on the packet, and then sends a filtered packet to the network device 2.

The head node in the communications network, namely, the network device 1, may directly generate a first packet, where the first packet includes a segment identifier list indicating a forwarding path; and then send the first packet in the communications network, where the first packet may be a fault detection packet, a probe packet, or the like. Alternatively, after receiving a first packet sent by another device, for example, a customer edge (customer edge, CE) device, the network device 1 inserts a segment identifier list into the first packet after determining a forwarding path corresponding to the first packet, to guide forwarding of the first packet in the segment routing network. When the network shown in FIG. 1 is SRv6, the network device 1 may add a new IPv6 header and a new SRH header to the first packet. The SRH includes the segment identifier list, and a destination address (destination address, DA) of the IPv6 header is the 1^{st} SID in the segment identifier list, namely, a SID whose corresponding SL has the largest value.

Optionally, the first packet includes a plurality of SRHs. In other words, the network device 1 adds the plurality of SRHs to the first packet, and each SRH includes one or more segment identifier lists. An example is as follows:

The network device 1 may obtain a segment identifier list 1, for example, (SID 2, SID 4, SID 5), where a forwarding path indicated by the segment identifier list 1 is the network device 2 -> the network device 4 -> the network device 5; and a segment identifier list 2, for example, (SID 6, SID 7, SID 8, SID 5), where a forwarding path indicated by the segment identifier list 2 is the network device 6 -> the network device 7 -> the network device 8 -> the network device 5. The network device 1 may insert the segment identifier list 1 or the segment identifier list 2 into the first packet to guide forwarding of the packet in the segment routing network.

It should be noted that one or more SIDs in the segment identifier list 1 or the segment identifier list 2 may be unavailable. In an SR-related technology, in a process of forwarding a packet by a network device in an SR network, when it is determined that a network device corresponding to a destination SID corresponding to the packet to be sent by the network device is unreachable, a next SID of the destination SID may be selected, and the packet is sent based on the next SID. For example, when the segment identifier list inserted by the network device 1 into the first packet is (SID 2, SID 4, SID 5), and the network device 2 corresponding to the SID 2 is unreachable, the network device 1 may send the first packet based on a next SID in the SID list, namely, the SID 4. However, when the unreachable SID is the last SID in the SID list, for example, when the network device 4 needs to forward the first packet to the network device 5, the destination SID is the SID 5. However, because there is no next SID in the segment identifier list, the network device 4 cannot obtain a new SID. In this case, only best-effort forwarding can be performed. Consequently, forwarding of the first packet is affected, a transmission delay of the first packet may be long, or even packet forwarding is interrupted or the packet is discarded, resulting in low reliability of the segment routing network.

Specifically, SRv6 is used as an example. The head node receives the first packet, and adds an IPv6 header and an SRH to the first packet. The SRH includes a segment identifier list and an SL value, the segment identifier list includes SIDs of n network devices, and n is an integer greater than 0. The n network devices are devices other than the head node that a forwarding path used to transmit the first packet in the communications network passes through, or may include the head node. An initial SL value is equal to n-1, and a DA of the IPv6 header is the 1^{st} SID in the segment identifier list.

The head node processes the first packet based on the DA, for example, sends the packet to a network device corresponding to the DA. For any other network device (which may be referred to as a first network device) that the forwarding path indicated by the segment identifier list passes through, the first network device receives a second packet. If the first network device is not a last-hop device on the forwarding path, before forwarding the packet, the first network device sets SL=SL-1 in the packet, reads a SID from the segment identifier list of the packet based on the updated SL value, and then sends the packet based on the SID. If the first network device is a last-hop device on the forwarding path, and may also be referred to as a tail node, the first network device strips the SRH from the second packet, including content such as the segment identifier list and the SL, and strips the new IPv6 packet header added by the header node, or obtains an original destination address based on the original first packet, and sends the first packet based on the destination address.

When the first network device is not the tail node of the forwarding path, after obtaining a SID of a second network device, the first network device detects that the second network device is faulty. In this case, the first network device may continue to set SL=SL-1 in the second packet, then read, based on the SL, a SID of a next-hop device (which is referred to as a third network device) of the second network device from the segment identifier list included in the second packet, and send the second packet based on the SID of the third network device. In this way, the second network device may be skipped. However, if the second network device is the last-hop device on the transmission path, when the second network device is faulty, because the segment identifier list in the second packet does not include the SID of the third network device, a delay of sending the second packet by the first network device is long, or even the packet is discarded.

In the foregoing, when a SID is unavailable, a previous-hop device on a forwarding path may skip the unavailable SID to send a packet. However, when the unavailable SID corresponds to a service, it indicates that the service is provided, and skipping the unavailable SID means skipping the service. For some services, importance of the services may be high. Even when there is an unavailable SID in the first packet, the services are not expected to be skipped. Alternatively, when the last SID in the plurality of SIDs of the first packet is unavailable, it is still expected that a long transmission delay, a packet loss, or the like of the first packet can be avoided as far as possible, to avoid impact on a service corresponding to the packet.

This application provides a means for resolving the technical problem. To be specific, a head node obtains a plurality of segment identifier lists, where the plurality of segment identifier lists include a primary SID list and at least one secondary SID list, the at least one secondary SID list includes a first secondary SID list, and the list is a backup of the primary SID list. The plurality of segment identifier lists herein are merely used to divide a plurality of segment identifiers. In actual application, the plurality of segment identifiers may belong to a same segment identifier list, and there is no actual distinction between a primary segment identifier list and a secondary segment identifier list.

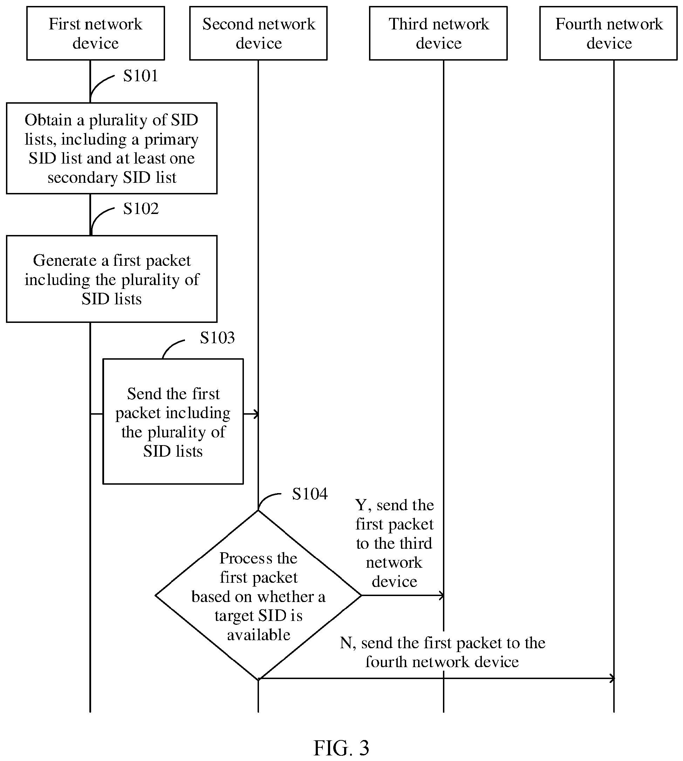

The first secondary SID list being a backup of the primary SID list means that a service corresponding to a SID in the first secondary SID list is a backup of a service corresponding to a SID in the primary SID list, or a forwarding path indicated by the first secondary SID list is a backup of a forwarding path indicated by the primary SID list. In this way, when one or more SIDs in the primary SID list are unavailable, the service corresponding to the SID included in the first secondary SID list may be used to continue to process the first packet. This is applied to the scenario shown in FIG. 1. The network device 1 may add both the segment identifier list 1 and the segment identifier list 2 to the packet, and a segment identifier list may be recorded as (SID 2, SID 4, SID 6, SID 7, SID 8, SID 5). The segment identifier list may be logically divided into a primary SID list: (SID 2, SID 4), a first secondary SID list (SID 6, SID 7, SID 8), and another SID list (SID 5). In this case, a primary forwarding path indicated by the primary SID list is the network device 2 -> the network device 4, a secondary forwarding path corresponding to the first secondary SID list is the network device 6 -> the network device 7 -> the network device 8, an end-to-end primary forwarding path is the network device 2 -> the network device 4 -> the network device 5, and an end-to-end secondary forwarding path is the network device 6 -> the network device 7 -> the network device 8 -> the network device 5. In this way, when the primary forwarding path indicated by the primary SID list is faulty, the packet may be sent based on the secondary forwarding path indicated by the secondary SID list. In the foregoing, the network device 2 and the network device 4 may be considered as intermediate nodes on the end-to-end primary forwarding path, and the network device 5 may be considered as a tail node on the end-to-end primary forwarding path. In the foregoing, when the segment identifier list is encapsulated into the packet, the primary SID list is adjacent to the secondary SID list, and the first SID in the secondary SID list is after the last SID in the primary SID list. It may also be considered that the primary SID list is a pre-sequence list of the secondary SID list. In an SRv6 packet, an SL value corresponding to the first SID in a secondary SID list is equal to an SL value corresponding to the last SID in a primary SID list minus 1. A detailed implementation process of processing the packet based on the first secondary SID list when the SID in the primary SID list is unavailable is described in detail in a subsequent embodiment shown in FIG. 3, and is not described herein.

Optionally, the at least one secondary SID list further includes a second secondary SID list, and the second secondary SID list is a backup of the first secondary SID list and/or the second secondary SID list is a backup of the primary SID list.

Optionally, the plurality of SID lists further include another primary SID list and another secondary SID list. The another primary SID list is a pre-sequence list of the another secondary SID list, the another primary SID list is after the M secondary SID lists, and the another secondary SID list is a backup of the another primary SID list.

Optionally, the first packet may include a plurality of primary SID lists and at least one secondary SID list corresponding to each primary SID list.

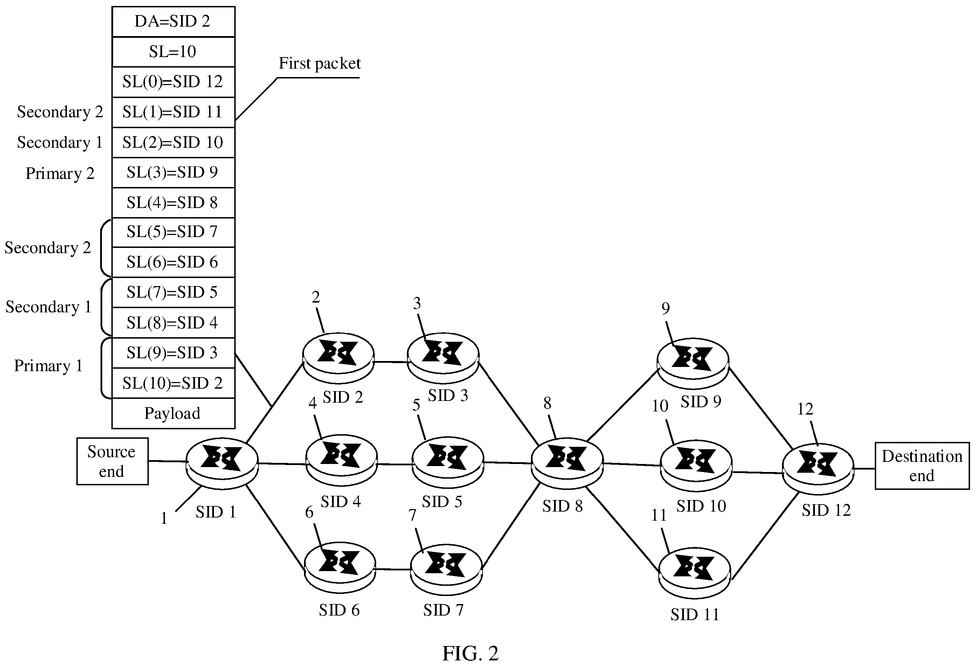

For example, FIG. 2 is a schematic diagram of an architecture of another communications network according to an embodiment of this application. In the network, a network device 1 is connected to a network device 2, a network device 4, and a network device 6; the network device 2 is connected to a network device 3 and the network device 1; the network device 4 is connected to the network device 1 and a network device 5; the network device 6 is connected to the network device 5 and a network device 7; the network device 3 is connected to the network device 2 and a network device 8; the network device 5 is connected to the network device 4 and the network device 8; the network device 7 is connected to the network device 6 and the network device 8; a network device 9 is connected to a network device 12 and the network device 8; a network device 10 is connected to the network device 12 and the network device 8; and a network device 11 is connected to the network device 12 and the network device 8. A SID list (SID 2, SID 3, SID 4, SID 5, SID 6, SID 7, SID 8, SID 9, SID 10, SID 11, SID 12) in a first packet generated by the network device 1 may be shown in the figure, and may be logically divided into a first primary SID list (SID 2, SID 3); at least one secondary SID list including a first secondary SID list (SID 4, SID 5) and a second secondary SID list (SID 6, SID 7), where the first secondary SID list is a backup of the first primary SID list, and the second secondary SID list is a backup of the first primary SID list and/or the first secondary SID list; another SID list (SID 8); a second primary SID list (SID 9), where at least one secondary SID list corresponding to the second primary SID list includes a first secondary SID list (SID 10) and a second secondary SID list (SID 11), the first secondary SID list (SID 10) is a backup of the second primary SID, and the second secondary SID list is a backup of the second primary SID list and/or the first secondary SID list (SID 10); and another SID list (SID 12).

A network device corresponding to a primary SID in the primary SID list (which is referred to as a primary network device for ease of description) and a network device corresponding to a secondary SID in the first secondary SID list (which is referred to as a secondary network device for ease of description) may be a same network device or different network devices. A service corresponding to the primary SID on the primary network device is the same as a service corresponding to the secondary SID on the secondary network device. In this way, the service corresponding to the secondary SID is a backup of the service corresponding to the primary SID.

Refer to FIG. 3. An embodiment of this application provides a packet processing method. The method can be applied to a communications network provided in any one of embodiments in FIG. 1, FIG. 2, and FIG. 7 to FIG. 11, and includes the following steps.

S101: A first network device obtains a plurality of SID lists, where the plurality of SID lists include a primary SID list and at least one secondary SID list, the at least one secondary SID list includes a first secondary SID list, and the first secondary SID list is a backup of the primary SID list.

The first network device may be a head node on a forwarding path that is in an SR network and that is used to transmit a corresponding packet. The first network device may obtain the plurality of SID lists before sending the packet or after receiving a corresponding route advertised by another device in the network.

The first network device may obtain the plurality of SID lists in the following first manner and second manner.

In the first manner, the first network device receives a message sent by a control device, where the message includes the plurality of SID lists, and the plurality of SID lists include the primary SID list and the at least one secondary SID list. The message is used to indicate the first network device to process, based on the plurality of SID lists, a packet received by the first network device.

In the first manner, the message may be a response message sent by the control device to the first network device based on a forwarding path (namely, a segment identifier list) requested by the network device to reach a destination address, or may be sent by the control device to the first network device after the control device obtains a segment identifier list based on pre-configured information. The control device may determine, based on the destination address and a topology structure of the segment routing network, the forwarding path used to transmit the service, determine N SIDs on the forwarding path, and determine the N SIDs as the primary SID list, where N is an integer greater than 0.

For the primary SID list, the control device determines the at least one secondary SID list corresponding to the primary SID list. The primary SID list and the at least one secondary SID list may be calculated by the controller, or may be pre-configured on the control device by an administrator. After determining the plurality of SID lists (including the primary SID list and the secondary SID list) corresponding to the corresponding forwarding path, the control device sends the information to the first network device. The information may be sent by the control device to the first network device at a time, or may be sent to the first network device at a plurality of times.

For example, refer to FIG. 1. The control device obtains a source IP address and a destination IP address, and determines, based on the source IP address and the destination IP address, the forwarding path used to transmit the packet. SIDs that the forwarding path passes through include the SID 1 of the network device 1, the SID 2 of the network device 2, the SID 4 of the network device 4, and the SID 5 of the network device 5. It is assumed that the administrator has set a to-be-protected forwarding path in these SIDs as (SID 2, SID 4). In this case, the controller obtains a secondary SID list corresponding to the primary SID list, where the secondary SID list is (SID 6, SID 7, SID 8), and the control device may send the information to the network device 1.

The control device may store SIDs of all network devices in the segment routing network. The network device in the segment routing network may advertise at least one SID of the network device to the control device, and may also receive a SID that is of the network device and that is configured by the control device.

Optionally, the network device advertises the SID to the control device in the following Manner 1 to Manner 3. Manner 1 to Manner 3 are respectively as follows:
Manner 1: The network device sends an advertisement packet to the control device, where the advertisement packet carries the at least one SID of the network device.

The advertisement packet may be a border gateway protocol (border gateway protocol, BGP) packet, a border gateway protocol Ethernet virtual private network (border gateway protocol Ethernet virtual private network, BGP EVPN) packet, or an interior gateway protocol (interior gateway protocol, IGP) packet. This is not specifically limited in this application.

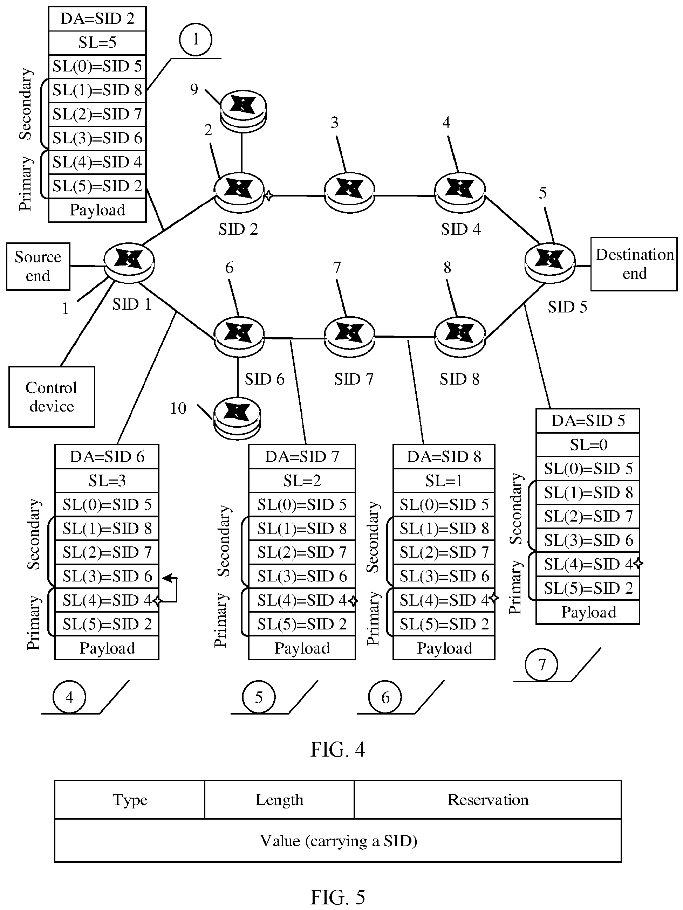

Optionally, the at least one SID of the network device is carried in a type length value (type length value, TLV) of the advertisement packet. The TLV is an encoding format, and is mainly defined by using three types of information: a type (type) field, a length (length) field, and a value (value) field. A schematic diagram of the format of the TLV is shown in FIG. 5. The type field in the figure identifies a type of the TLV, a value of the type field may identify that the TLV is a TLV used to advertise the SID, and the value of the type field may be a type newly applied for advertising the SID, for example, may be 90. A value of the length field identifies a length of the TLV. The value field is used to carry the at least one SID of the network device.

Manner 2: The network device may advertise the at least one SID of the network device to the control device by using a BGP-link state (border gateway protocol-link state, BGP-LS).

Manner 3: The network device may advertise the at least one SID of the network device to the control device by using a path computation element communication protocol (path computation element communication protocol, PCEP).

Optionally, the control device is a controller or a path computation element (path computation element, PCE), and may also be referred to as a path computation unit.

Optionally, the message sent by the control device to the first network device further includes a packet feature and/or a routing feature. For example, the message further includes the destination IP address, and the destination IP address may be considered as the routing feature. The packet feature may be information such as a priority of the packet. The message is further used to indicate the first network device to process, based on the plurality of SID lists, a packet that conforms to the packet feature or the routing feature. For example, after receiving the packet that conforms to the packet feature or the routing feature, the first network device adds the plurality of segment identifier lists to the packet.

Optionally, the message further carries location indication information, and the location indication information is used to indicate one or more of the following: a location of the primary SID list in the plurality of SID lists, a location of the first secondary SID list in the plurality of SID lists, and a location of the at least one secondary SID list in the plurality of SID lists.

The location indication information may indicate the foregoing information in a plurality of manners, for example, a location of the last SID of the primary SID list in the plurality of SIDs, a location of the 1^{st} SID of the first secondary SID list in the plurality of SIDs, or a location of the 1^{st} SID in the primary SID list in the plurality of SIDs, a quantity of SIDs in the primary SID list, and a quantity of SIDs in the at least one secondary SID list. In this way, the network device may determine the location of the primary SID list, the location of the first secondary SID list, or the location of the at least one secondary SID list based on the information. Generally, when the network device determines the location, the network device mainly determines the location of the last SID of the primary SID list, the location of the 1^{st} SID of the first secondary SID list, and a location of the last SID of the at least one secondary SID list. The information may be sent by the control device to the first network device by using a same message, or may be sent by the control device by using different messages. When the control device sends the information to the first network device by using a plurality of messages, the control device further sends associated information of the information to the first network device, and associates the content by using the association information.

After receiving the information, the first network device may assemble the plurality of segment identifier lists according to an SRv6 rule or an MPLS rule when generating a first packet.

In the second manner, the first network device may automatically calculate a forwarding path to obtain the plurality of SID lists.

For example, the manner is applied to the network shown in FIG. 1. When the network device 5 advertises a route to the network device 1, the network device 1 may automatically calculate a forwarding path after receiving the route.

S102: The first network device generates the first packet, where the first packet includes the plurality of SID lists, the plurality of SID lists include the primary SID list and the at least one secondary SID list, the at least one secondary SID list includes the first secondary SID list, and the first secondary SID list is a backup of the primary SID list.

Optionally, the first network device may directly generate the first packet. For example, the first network device generates a fault detection packet.

Optionally, the first network device receives a second packet, and generates the first packet based on the second packet.

The first network device receives the second packet, and adds a packet header to the second packet to obtain the first packet, where the packet header includes the plurality of SID lists. In this case, the second packet may be a payload (payload) of the first packet.

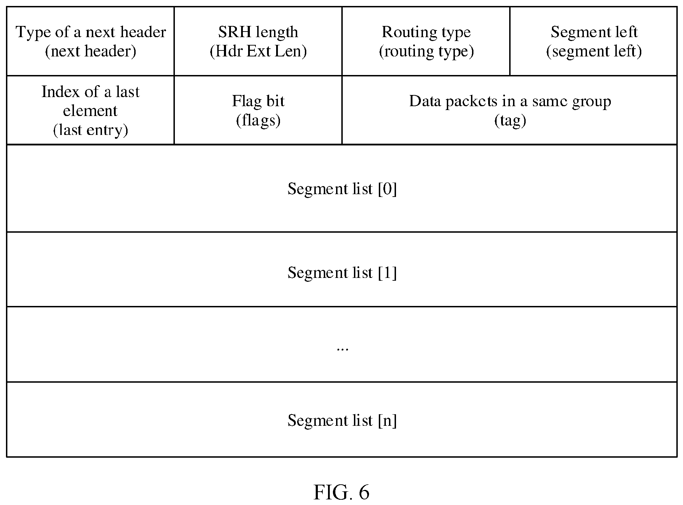

In an example, in an SRv6 network, the first network device adds an SRH to the second packet to obtain the first packet. Refer to an SRH format shown in FIG. 6. The SRH includes information such as a segment identifier list and an SL, the segment identifier list includes the plurality of SID lists, and SIDs in the plurality of SID lists are separately carried in a segment list [n] to a segment list [0]. Alternatively, the first network device may add a plurality of SRHs to the second packet, and each SRH includes a segment identifier list. For example, a primary SID list is placed in the 1^{st} SRH, and a secondary SID list is placed in the 2^{nd} SRH. A format of each SRH is shown in FIG. 6.

Optionally, the first network device may further add a new IPv6 packet header to the first packet, and a DA in the new IPv6 packet header is the first SID in the segment identifier list.

Optionally, the first network device may modify a DA in an original IPv6 packet header of the packet to the first SID in the segment identifier list.

In another example, in SR-MPLS, the first network device adds an MPLS packet header to the second packet, to obtain the first packet. The MPLS packet header includes a label stack, and the label stack includes the plurality of SID lists.

Optionally, the first packet includes the location indication information. The location indication information is used to indicate one or more of the following: the location of the primary SID list in the plurality of SIDs, the location of the first secondary SID list in the plurality of SID lists, and the location of the at least one secondary SID list in the plurality of SID lists.

For detailed descriptions of the location information, refer to the foregoing descriptions of sending the control message to the network device by the control device. Details are not described herein again in this application.

The first network device may directly encapsulate, into the first packet, the received location indication information sent by the control device, or may determine the location indication information based on encapsulation of an SRH header by the first network device, and then encapsulate the location indication information into the first packet.

When encapsulating the first packet, the first network device encapsulates the location information into the packet. The information may be used to indicate the network device on the forwarding path indicated by the plurality of SID lists to determine the location of the primary SID list, the location of the first secondary SID list, or the location of the at least one secondary SID list. Main objectives are as follows: 1. When the network device determines that a forwarding path or a service corresponding to any SID in the primary SID list is unavailable, after obtaining the 1^{st} SID (which is referred to as a first secondary SID subsequently for brevity of subsequent description) in the first secondary SID list, the network device skips an unexecuted SID in the primary SID list, forwards the packet or provides a corresponding service for the packet by using the first secondary SID, and forwards the packet based on the first secondary SID list. 2. When a service or a network device corresponding to the last SID in the primary SID list is available, and a function corresponding to the SID can be successfully executed, the network device may skip a SID in the at least one secondary SID list, to obtain a SID after the at least one secondary SID list in the plurality of SID lists, and forward the packet or provide a corresponding service for the packet based on the SID. 3. When the last SID in the primary SID list is the last SID on an end-to-end primary forwarding path, that is, when the network device corresponding to the SID is a tail node on the end-to-end primary forwarding path, when the service or the network device corresponding to the SID is available, and the function corresponding to the SID can be successfully executed, the network device may skip the SID in the at least one secondary SID list and forward the packet.

In some scenarios, for example, when the primary SID list includes only one SID, and the at least one secondary SID list includes only the first secondary SID list, the location indication information may be only the SID in the primary SID list. When the SID is unavailable, the network device may use a method in a related technology to obtain a next SID, namely, a SID in the first secondary SID, and perform forwarding or provide a corresponding service based on the SID. When the SID is available, after the SID can be executed without a fault, the first secondary SID list may be skipped based on the SID, to obtain the 1^{st} SID after the first secondary SID list in the plurality of SID lists, and the packet is processed based on the 1^{st} SID after the first secondary SID list. When the first secondary SID list is the last list in the plurality of SID lists, the SID in the primary SID list may be a special SID, and the SID has a function of indicating the network device corresponding to the SID to strip an SRH header. In this case, there is no need to further determine whether there is another SID in the plurality of SID lists or determine the locations of the primary and secondary SID lists. Instead, the SRH header is directly stripped, and then the plurality of SID lists are stripped.

Optionally, the location indication information includes the last SID in the primary SID list and/or the 1^{st} SID in unexecuted SIDs in the primary SID list.

In the following, the network device determines the first secondary SID based on the SID in the following plurality of manners.
1. The network device may search the network device for a correspondence between an identifier of the SID and the first secondary SID or a location difference between the identifier of the SID and the first secondary SID based on the SID. The location difference may be understood as a quantity of SIDs after the SID in the primary SID list, or may be understood as a difference between an SL value of the first secondary SID and an SL value of the SID. The first secondary SID is obtained based on the location difference.
2. The SID directly carries the location difference information, so that the network device may obtain the first secondary SID based on the location difference information. In an example, the location difference information may be carried in an argument part of the SID, or certainly, may be carried in another part of the SID. This is not specifically limited in this application. In an SRv6 example, a value of the last SID in a primary SID list may be A2:: 1: 1, where A2 is a locator, ::1 is a function corresponding to End.x, and :1 is Argu, indicating that SL-2 is required. In this way, a network device corresponding to the SID may accurately skip a secondary SID by using the SL-2.

Optionally, the location indication information may also include the SID in the at least one secondary SID list.

The network device may obtain, based on the SID in the at least one secondary SID list, the SID after the at least one secondary SID list, or determine, based on the SID in the first secondary SID list, the 1^{st} SID of a backup secondary SID list that provides a backup for the first secondary SID list. A manner in which the network device obtains a related SID based on the SID in the at least one secondary SID list is similar to the manner in which the network device obtains the first secondary SID based on the SID in the primary SID list. Details are not described herein again.

Optionally, the location information may alternatively be in metadata of the SRH of the first packet. A format of the metadata may be shown as the TLV in FIG. 5. The type field in the figure identifies a type of the TLV, a value of the type field may identify that the TLV is a TLV used to carry the location indication information, and the value of the type field may be a type newly applied for the location indication information, for example, may be 91. A value of the length field identifies a length of the TLV. The value field may be used to indicate the location of the first SID in the first secondary SID and/or the location of the last SID in the at least one secondary SID list and/or a location of the SID after the at least one secondary SID list.

In an example, a value of the metadata being m5b3 may be understood that a value of an SL corresponding to the last SID in the primary SID list is 5, and a value of an SL corresponding to the last SID in the at least one secondary SID list is 3. Herein, m is an abbreviation of a primary forwarding path, and b is an abbreviation of a secondary forwarding path. Alternatively, another manner such as defining, in the metadata, that different bits correspond to different forwarding paths may be used. A manner of carrying the location indication information in the metadata is not limited in this application.

In this embodiment of this application, the location indication information may alternatively be a combination of the foregoing two or three. To be specific, the location information that needs to be determined may be indicated in a manner of metadata + the tail SID in the primary SID list, a manner of metadata + the SID in the first secondary SID list, or any other variable manner, to obtain the corresponding first secondary SID or the 1^{st} SID after the at least one secondary SID list.

Optionally, the at least one secondary SID list in the first packet further includes a second secondary SID list, and the second secondary SID list is a backup of the first secondary SID list and/or the second secondary SID list is a backup of the primary SID list.

S103: The first network device sends the first packet to a second network device.

When a first SID in the plurality of segment identifier lists is a SID of the second network device, the first network device sends the first packet to the second network device based on the SID.

When the first SID is a SID of the first network device, and the first SID is not the last SID on a primary forwarding path corresponding to the segment identifier list, the first network device provides a service corresponding to the first SID for the first packet based on the first SID being determined to be available. In addition, the first network device obtains a next SID of the first SID, and sends the first packet to the second network device based on the next SID.

In the SRv6 network, the first network device obtains a SID corresponding to the SL value minus 1, sets content carried in a destination address field of the first packet to the SID, and sends the first packet based on the SID.

When the communications network is the SR-MPLS network, after popping a SID at the top of the label stack of the first packet, the first network device sends the first packet based on a new SID at the top of the stack.

In the foregoing, the SID corresponding to the DA in the packet header in the SRv6 network and the SID at the top of the label stack in the SR-MPLS network each may be referred to as a first destination SID. The first destination SID may be a SID in the primary SID list, or may not be a SID in the primary SID list.

In this step, when the first destination SID is a SID in the primary SID list, the first network device considers the first destination SID as a target SID before sending the first packet. It is determined whether the first destination SID is available. The first destination SID being available includes that a service corresponding to the first destination SID is available, or the first destination SID is reachable.

When the first destination SID belongs to the first network device, that is, the first destination SID is the SID of the first network device, and the first destination SID corresponds to a service, the service corresponding to the first destination SID being unavailable includes that the first network device determines that a resource required by the service cannot be provided, or the first network device cannot provide a function required by the service. Otherwise, it is considered that the service corresponding to the first destination SID is available. In other words, the first network device may execute the first destination SID without a fault.

The first destination SID being unreachable includes that when the first destination SID is used as a destination address, the first network device determines that a route to the destination address is unreachable, or any network device or link between the first network device and the destination address is faulty.

When the first destination SID is available, the first network device may send the first packet based on the first destination SID, that is, use the first destination SID as a destination address to send the first packet.

For example, FIG. 4 shows a specific example in which the method embodiment of this application is applied to the network scenario shown in FIG. 1. When determining that the SID 2 is available, the first network device sets the content in the destination address (DA) field of the first packet to the SID 2, and sends the first packet to the network device 2 corresponding to the SID 2.

The network device in the SR network may be configured by default to process the packet based on the SID corresponding to the destination address in the first packet or based on availability of the first SID. In other words, in this case, the network device does not need to determine whether these SIDs are in the primary SID list.

For example, refer to FIG. 4. It is assumed that when determining that the SID 2 is available, the network device 1 sends the first packet to the network device 2 by using the SID 2 as a destination address. A packet header of the packet may be briefly shown as ①, and a segment identifier list in the packet header of the packet is (SID 2, SID 4, SID 6, SID 7, SID 8, SID 5), where a primary SID list is (SID 2, SID 4), a secondary SID list is (SID 6, SID 7, SID 8), and another SID list is (SID 5). It may be considered that a primary forwarding path indicated by the primary SID list is the network device 2 -> the network device 4. It may be learned from the network topology that the primary forwarding path further passes through the network device 3. In other words, the primary forwarding path may also be understood as the network device 2 -> the network device 3 -> the network device 4. A secondary forwarding path indicated by the secondary SID list is the network device 6 -> the network device 7 -> the network device 8. An end-to-end forwarding path is the network device 1 -> the network device 2 -> the network device 4 -> the network device 5 or the network device 1 -> the network device 2 -> the network device 3 -> the network device 4 -> the network device 5. The network device 2 receives the first packet. In this case, the SL value in the first packet is 5.

When determining whether the target SID is available, the first network device may use one or more SIDs in the primary SID list as target SIDs. In this scenario, the network device needs to learn in advance which SIDs in the segment identifier list are SIDs in the primary SID list and which SIDs are SIDs in the secondary SID list.

For example, in FIG. 4, the network device 1 may also use the SID 4 as the target SID, and send the first packet to the network device 2 based on the SID 2 after determining that both the SID 2 and the SID 4 are reachable or only the SID 4 is reachable.

For a case in which the first destination SID is a SID in the primary SID list and the first destination SID is unavailable, refer to descriptions of S104. Details are not described herein.

S104: The second network device receives the first packet, and processes the first packet based on whether the target SID is available.

The target SID may be one or more SIDs in the primary segment identifier list in the packet when the second network device receives the first packet.

That the second network device processes the first packet based on whether the target SID is available includes the following plurality of different solutions:

### Solution 1:

When the second network device is an upstream device of the unexecuted SID in the primary SID list on the forwarding path indicated by the plurality of SID lists, the second network device receives the first packet, and obtains a second destination SID from the plurality of SIDs in the first packet, where the second destination SID is the 1^{st} SID in the primary SID list. The upstream device includes an intermediate node or a head node on the end-to-end primary forwarding path indicated by the plurality of SID lists, or a network device that the primary forwarding path passes through.

The target SID may include the second destination SID, and may further include another SID in the primary SID list. When the target SID is available, the second network device sends the first packet to a third network device based on the second destination SID, where the third network device is a network device corresponding to the second destination SID.

The following explains a concept of the upstream device of the primary SID list with reference to FIG. 4. As shown in FIG. 4, the primary SID list in the network is (SID 2, SID 4). When the network device 2 receives the first packet, the SID 2 and the SID 4 are unexecuted SIDs. In this case, the first network device may be considered as an upstream device corresponding to the unexecuted SIDs (the SID 2 and the SID 4). When the network device 4 receives the first packet, the SID 4 is an unexecuted SID, and the second network device and the third network device may be considered as upstream devices of the unexecuted SID (the SID 4).

In an example, the communications network is the SRv6 network. When a device corresponding to the destination address of the first packet is the second network device, the second network device provides, based on the destination address of the first packet, a service corresponding to the SID of the destination address for the first packet. When the SID is a SID including a forwarding guidance function, for example, a node SID or a link SID, after receiving the first packet, the second network device reads, based on SL=SL-1, a SID corresponding to the SL value from the segment list as the second destination SID, uses the second destination SID as a destination address of the first packet, and sends the first packet based on the destination address.

In another example, the communications network is the SRv6 network. When the network device corresponding to the destination address of the first packet is the third network device, and the network device 3 shown in FIG. 4 receives the packet, the destination address of the packet is the SID 4. In this case, the network device 3 may process the first packet based on whether the SID 4 is reachable. If the SID 4 is reachable, the network device 3 sends the first packet based on the SID 4. If the SID 4 is unreachable, the network device 3 may obtain a SID corresponding to the SL minus 1, and send the first packet to the network device 6 by using the SID as a destination address. In this case, the network device 3 needs to be a device that supports SR.

When the communications network is the SR-MPLS network, the first packet received by the second network device includes the label stack. In this case, the SID at the top of the label stack is the SID of the second network device. The second network device pops the SID at the top of the label stack, provides a service corresponding to the SID for the first packet based on the SID, and uses a SID currently at the top of the stack as the second destination SID.

Optionally, before the second network device determines whether the target SID is available, the second network device receives a configuration instruction sent by the control device, a management device, or the administrator through a management interface, and performs, based on the configuration instruction, an action of processing the first packet by determining whether the target SID is available. The configuration instruction herein may be a configuration delivered by the administrator when the administrator turns on a switch of a function that is of the network device and that corresponds to this embodiment of this application. Herein, the configuration instruction may also be sent to all other devices on the segment routing network. This is not limited in this application.

Optionally, when the second network device is the upstream device of the primary SID list, an operation of processing, by the second network device, the first packet based on whether the second destination SID is available includes the following operations in S1041 to S1043.

S1041: The second network device determines whether the target SID is available.

In this step, the second network device determines whether the target SID, namely the second destination SID, is reachable for the second network device; and when the second destination SID is reachable for the second network device, determines that the second destination SID is available; or when the second destination SID is unreachable for the second network device, determines that the second destination SID is unavailable.

The second destination SID being unreachable for the second network device includes that when the second destination SID is used as a destination address, the second network device determines that a route to the destination address is unreachable, or any network device or link between the second network device and the destination address is faulty.

The second destination SID corresponds to a network device, which is referred to as the third network device for ease of description. The route from the second network device to the destination address being unreachable means that a route from the second network device to the third network device is unreachable. Alternatively, any network device or link between the second network device and the destination address being faulty means that any network device that a link between the second network device and the third network device passes through is faulty, or a link between any two of network devices that the link passes through is faulty.

Optionally, by using a local outbound interface state or link state of the second network device, the second network device perceives whether any network device that the link between the second network device and the third network device passes through is faulty, or whether the link between any two of the network devices that the link passes through is faulty. Alternatively, by using a detection protocol, the second network device detects whether any network device that the link between the second network device and the third network device passes through is faulty, or whether the link between any two of the network devices that the link passes through is faulty. The detection protocol may be a bidirectional forwarding detection (bidirectional forwarding detection, BFD) protocol.

Optionally, in S1042, the second network device sends the first packet by using the second destination SID as the destination address based on the second destination SID being available.

In other words, the second network device sends the first packet to the third network device corresponding to the second destination SID.

When the communications network is the SRv6 network, the content in the destination address (DA) field of the first packet is set to the second destination SID, and the first packet is sent to the third network device. When the communications network is the SR-MPLS network, the first packet is sent to the third network device based on the second destination SID.

Optionally, in S1043, when determining that the target SID is unavailable, the second network device obtains the 1^{st} SID in the first secondary SID list, and processes the first packet based on the 1^{st} SID (the first secondary SID) in the first secondary SID list.

A manner in which the second network device processes the first packet based on the 1^{st} SID in the first secondary SID list includes: sending the first packet to a fourth network device based on the SID.

For details about a manner of obtaining the first secondary SID by the second network device, refer to the descriptions in S102. The details are not described herein again, and the description is provided by merely using an example.

In an example, when the communications network is the SRv6 network, an implementation process of an operation of skipping, by the second network device, the unexecuted SID in the primary SID list and processing the first packet based on the first secondary SID list is as follows:

Refer to FIG. 4. The second destination SID is the SID 2. When the network device 1 determines that the SID 2 is unavailable, the primary SID list in the first packet includes the SID 2 and the SID 4, and the first secondary SID list corresponding to the primary SID list includes the SID 6, the SID 7, and the SID 8. The first packet includes the location indication information. It is assumed that the location indication information includes a quantity 2 of SIDs included in the primary SID list and location information of the location of the head SID in the primary SID list. For example, the location of the head SID corresponds to an SL value 5. In this way, the second network device determines a location of the primary SID list based on the location indication information, that is, determines that the location of the last SID in the SID list is SL=5-2=3; learns, from the first packet based on SL=3, that a first secondary SID corresponding to SL=3 is the SID 6; and sends the first packet to the network device 6 by using the SID 6 as a destination address. A packet header of the first packet sent to the network device 6 may be briefly shown as ⑥.

When the communications network is the SR-MPLS network, an implementation process of an operation of skipping, by the second network device, the unexecuted SID in the primary SID list and processing the first packet based on the first secondary SID list is as follows:

The top of the label stack in the first packet includes the 1^{st} unexecuted SID in the primary SID list, and x+1 SIDs are continuously popped from the label stack, where x is a quantity of unexecuted SIDs in the primary SID list. In this case, a new SID at the top of the stack is a head SID in a first secondary SID list after the primary SID list, and the first packet is processed based on the head SID. For example, the head SID is used as a destination address to forward the first packet.

In another example, the primary SID list includes only one SID, or the unexecuted SID in the primary SID list includes only the last SID. When the second network device determines that the second destination SID (namely, the only SID in the primary SID list or the tail SID in the primary SID list) is unavailable, the second network device may directly obtain a next SID of the second destination SID according to a related technology, and process the first packet based on the next SID, for example, obtain a corresponding SID based on SL--, or obtain a top label after popping a label.

### Solution 2:

S105: The second network device obtains the target SID, namely, a third destination SID, from the first packet, and processes the first packet based on whether the third destination SID is available.

When the target SID is the 1^{st} SID in the unexecuted SIDs in the primary SID list, the target SID is a SID of the second network device, and the SID includes a corresponding service, an operation of processing, by the second network device, the first packet based on whether the target SID is available specifically includes the following operations in S1051 to S1053.

S1051: The second network device obtains the target SID from the first packet.

In this step, when the communications network is the SRv6 network, the destination address of the packet is the target SID. When the communications network is the SR-MPLS network, the top of the label stack of the first packet includes the target SID. For ease of description and distinguishing from another scenario, the target SID is referred to as the third destination SID.

Because the third destination SID is the SID of the second network device, a service corresponding to the third destination SID is a service provided by the second network device. The second network device determines, based on the service corresponding to the third destination SID being available, that the third destination SID is available; or determines, based on the service corresponding to the third destination SID being unavailable, that the third destination SID is unavailable. For descriptions about whether the third destination SID is available, refer to the foregoing descriptions. Details are not described in this embodiment of this application again.

S1052: The second network device provides the service corresponding to the third destination SID for the first packet based on the third destination SID being available.

As shown in FIG. 4, when the network device is the network device 2, the network device 2 sends the first packet to the network device 9. After providing a service for the packet, the service device 9 returns the first packet to the network device 2.

When the third destination SID is not the last SID in the primary SID list, the second network device obtains, from the first packet, a SID located after the third destination SID, and sends the first packet to a corresponding third network device by using the obtained SID as a destination address.

When the communications network is the SRv6 network, the third network device sets SL=SL-1, reads a SID from the plurality of SIDs in the first packet based on the reduced SL, and sends the first packet to the corresponding third network device by using the read SID as a destination address.

For example, refer to FIG. 4. When determining that the SID 2 is available, the network device 2 provides a service corresponding to the SID 2 for the first packet, sets SL=SL-1=4, reads the SID 4 from the plurality of SIDs in the first packet based on the reduced SL, and sends the first packet to the network device 4 by using the SID 4 as a destination address.

When the communications network is the SR-MPLS network, the second network device pops the SID at the top of the label stack in the first packet, and sends the first packet by using a new SID at the top of the stack as a destination address.

When the third destination SID is the last SID in the primary SID list, detailed descriptions are provided in S106, and details are not described herein.

S1053: The second network device processes the first packet based on the 1st SID (the first secondary SID) in the first secondary SID list when determining that the third destination SID is unavailable.

That the second network device processes the first packet based on the first secondary SID includes: The second network device sends the first packet to a fourth network device based on the first secondary SID.

For a method for obtaining the 1^{st} SID in the first secondary SID list by the second network device, refer to the descriptions in S102 and S104. An example is mainly described herein.

In an example, when the communications network is the SRv6 network, an implementation process of an operation of skipping, by the second network device, the unexecuted SID in the primary SID list and processing the first packet based on the first secondary SID list is as follows:
For example, refer to FIG. 4. It is assumed that the network device 2 determines that the SID 2 is unavailable, that is, the target SID is the SID 2. The primary SID list in the first packet includes the SID 2 and the SID 4, and the first secondary SID list corresponding to the primary SID list includes the SID 6, the SID 7, and the SID 8. The first packet includes the location indication information. It is assumed that the location indication information includes a quantity 2 of SIDs included in the primary SID list and the location of the head SID in the primary SID list. For example, the location of the head SID is an SL value, and the SL value is 5. In this way, the third network device learns, from the first packet based on the location indication information, that the head SID in the first secondary SID is the SID 6, and sends the first packet to the network device 6 by using the SID 6 as a destination address.

When the communications network is the SR-MPLS network, an implementation process of an operation of skipping, by the second network device, the unexecuted SID in the primary SID list and processing the first packet based on the first secondary SID list is as follows:
The top of the label stack in the first packet includes the 1^{st} unexecuted SID in the primary SID list, and x+1 SIDs are continuously popped from the label stack, where x is a quantity of unexecuted SIDs in the primary SID list. In this case, a new SID at the top of the stack is the 1^{st} SID in a first secondary SID list after the primary SID list, and the first packet is processed based on the first secondary SID. For example, the first packet is sent to the third network device corresponding to the first secondary SID.

### Solution 3:

The target SID is the last SID in the primary SID list, and the target SID is a SID of the second network device.

S106: The second network device obtains the target SID, namely, a fourth destination SID, from the first packet, and processes the first packet based on whether the fourth destination SID is available.

The second network device receives the first packet, and obtains the fourth destination SID from the first packet. When the communications network is the SRv6 network, the destination address of the first packet is the fourth destination SID. When the communications network is the SR-MPLS network, the top of the label stack of the first packet is the fourth destination SID, and the SID at the top of the stack is popped to obtain the fourth destination SID.

Optionally, the second network device receives a configuration instruction, and performs, based on the configuration instruction, an action of sending the first packet based on whether the fourth destination SID is available. Optionally, the configuration instruction may be sent by the control device, and is used to trigger the secondnetwork device to enable a function. The function is to process the first packet based on whether the fourth destination SID is available.

Optionally, that the second network device processes the first packet based on whether the fourth destination SID is available includes the following operations in S1061 to S1063.

S1061: The second network device determines whether the fourth destination SID is available.

Because the fourth destination SID is the SID of the second network device, a service corresponding to the fourth destination SID is a service provided by the second network device. The second network device determines whether the service corresponding to the fourth destination SID is available, and when the service corresponding to the fourth destination SID is available, determines that the fourth destination SID is available, or when the service corresponding to the fourth destination SID is unavailable, determines that the fourth destination SID is unavailable.

For example, refer to FIG. 4. It is assumed that the network device 4 receives the first packet. In this case, the SL value in the first packet is 4. The SID 4 is obtained from the plurality of SIDs in the first packet based on the SL value, and the SID 4 is the fourth destination SID. It is determined whether the SID 4 is available.

S1062: When the fourth destination SID is available, the second network device provides the service corresponding to the fourth destination SID for the first packet, skips the at least one secondary SID list, and sends the first packet.

The fourth network device skips the at least one secondary SID list based on the location indication information, and sends the first packet.

For content of the location indication information carried in the first packet, refer to the content in S102. Details are not described herein again in this application.

In the example shown in FIG. 4, the network device 4 determines that the SID 4 is available, and determines, based on the location indication information, that a quantity of SIDs included in the secondary SID list is 3. In this case, the SL in the first packet is 4, SL=SL-4=0 is set, and the secondary SID list is skipped based on the reduced SL. The SID 5 is obtained from the first packet, and the first packet is sent to the network device 5 by using the SID 5 as a destination address. Certainly, the location indication information may alternatively directly include a value of an SL corresponding to the 1^{st} SID after the at least one secondary SID list in the plurality of SID lists. The fourth network device may directly obtain the SID 5 based on the value of the SL.

In another example, when the communications network is the SR-MPLS network, the top of the label stack in the first packet includes the 1^{st} SID in the at least one secondary SID list, and the SIDs in the at least one secondary SID list are continuously popped from the label stack. In this case, a new SID at the top of the stack is the 1^{st} SID after the at least one secondary SID list, and the first packet is processed based on the 1^{st} SID. For example, the 1^{st} SID is used as a destination address to forward the first packet.

Particularly, when the plurality of segment identifiers in the first packet have no other SID after the at least one secondary SID list, that is, when the second network device is the tail node corresponding to the end-to-end primary forwarding path indicated by the plurality of segment identifier lists, the second network device strips the plurality of segment identifier lists based on the fourth destination SID.

In this scenario, the second network device may be a tail node connected to the third network device, and an operation indicated by the fourth destination SID is to remove the packet header of the first packet. To be specific, the second network device strips or decapsulates the SRH or the MPLS packet header of the first packet to obtain the second packet, and sends the second packet to the third network device based on the destination address in the second packet.

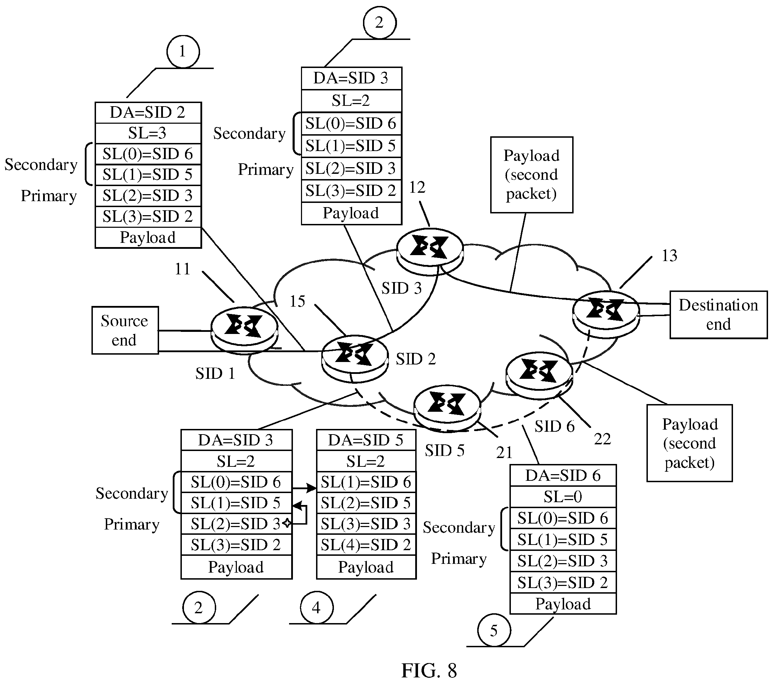

For more application scenarios in which the network device corresponding to the third destination SID is the tail node corresponding to the end-to-end primary forwarding path indicated by the plurality of segment identifier lists, refer to embodiments of application scenarios shown in FIG. 8, FIG. 10, and FIG. 11. Details are not described herein again in this application.

S1063: The second network device processes the first packet based on the first secondary SID list when determining that the fourth destination SID is unavailable.

In the first packet, the first secondary SID list is located after the fourth destination SID.

That the second network device processes the first packet based on the first secondary SID list includes: The second network device sends the first packet to a fourth network device based on the 1^{st} SID in the first secondary SID list, namely, the first secondary SID.

Optionally, when the communications network is the SRv6 network, the SL in the first packet indicates the fourth destination SID, and the fourth network device sets SL=SL-1. The reduced SL indicates a head SID in a first secondary SID list after the primary SID list. A SID is read from the plurality of SIDs included in the first packet based on the reduced SL, to obtain the head SID in the first secondary SID list. The first packet is processed based on to the head SID. For example, the head SID is used as a destination address to forward the first packet.

For example, refer to FIG. 4. The network device 4 determines that the SID 4 is unavailable. In this case, the SL in the first packet is equal to 4, and SL=SL-1 is set. The head SID, in the first secondary SID, that is obtained from the first packet based on the reduced SL is the SID 6, and the first packet is sent to the network device 6 by using the SID 6 as a destination address.

When the communications network is the SR-MPLS network, the top of the label stack in the first packet includes the head SID in the first secondary SID list. A SID is popped from the label stack to obtain the head SID in the first secondary SID list, and the first packet is processed based on the head SID. For example, the head SID is used as a destination address to forward the first packet.

When the first packet further includes the second secondary SID list, and the second secondary SID list is a backup of the first secondary SID list, the first secondary SID list may be considered as the primary SID list, and the second secondary SID list may be considered as the first secondary SID list. The technical solution provided in the foregoing method embodiments is used, to provide protection for the first secondary SID list.

When a plurality of secondary SID lists in the at least one secondary SID list of the first packet are backups of the primary SID list, the network device may determine, in a random manner, a hash manner, or a manner of specifying a selection sequence for the plurality of secondary SID lists, which secondary SID list is used as the first secondary SID list. In other words, when the SID in the primary SID list is unavailable, the first packet is processed based on the 1^{st} SID in the secondary SID list. When there is a specified selection sequence for the plurality of secondary SID lists, a secondary SID list that ranks highest may be placed at a location adjacent to the primary SID list, and a secondary SID list that ranks second highest may be placed after the first secondary SID list.

In this embodiment of this application, because the first packet generated by the first network device includes the primary SID list and the at least one secondary SID list, when the SID in the primary SID list is unavailable, the unexecuted SID in the primary SID list is skipped, to obtain the 1^{st} SID in the first secondary SID list, and the first packet is processed based on the first secondary SID list. In addition, because the first secondary SID list is a backup of the primary SID list, the first secondary SID list is used to process the first packet, to avoid skipping the service provided by the primary SID list. When the SID in the primary SID list is a SID of a tail node connected to a destination end, and the SID in the primary SID list is unavailable, the first secondary SID list is used to process the first packet. This avoids a long delay in transmitting the first packet or a further problem of low network reliability, for example, packet transmission interruption.

The foregoing are detailed descriptions of step S104 including S1041 to S1043, S105, S106, and related substeps.

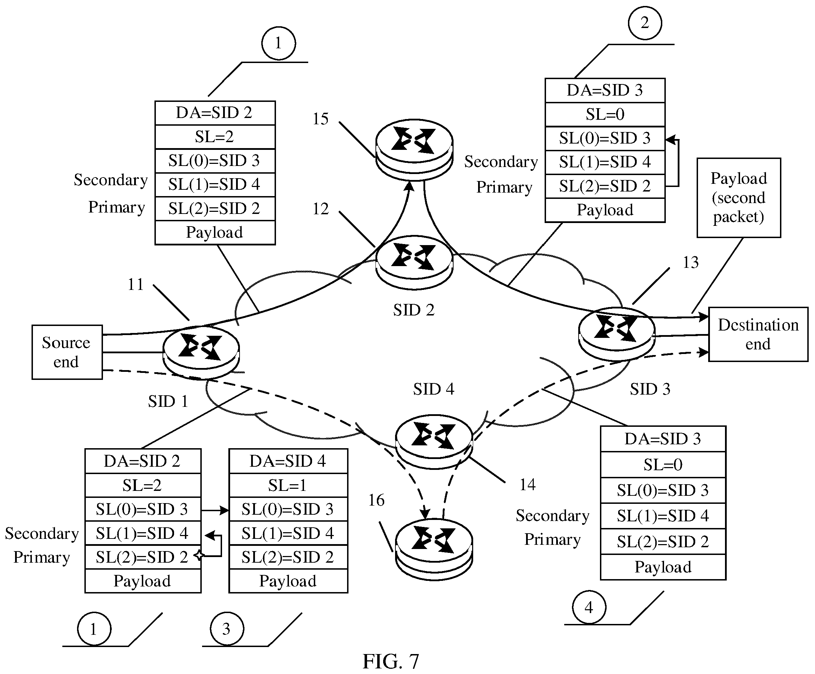

The foregoing briefly describes the method embodiments of this application with reference to the network scenario shown in FIG. 1. The following provides specific application examples of the method embodiments shown in FIG. 3 with reference to various different application scenarios, as shown in FIG. 7 to FIG. 11.

FIG. 7 is a specific application of the method embodiments shown in FIG. 3. In the application, a primary SID list and a secondary SID list each have only one SID. The application particularly describes a backup protection scenario of a forwarding path or a service of an intermediate node on a forwarding path in a segment routing network according to an embodiment of this application. Details are as follows:
In an SRv6 network shown in FIG. 7, a network device 11 is connected to a network device 12 and a network device 14; the network device 12 is connected to a network device 15, the network device 11, and a network device 13; the network device 14 is connected to the network device 11, a network device 16, and the network device 13; the network device 11 is a head node in the segment routing network; and the network device 13 is a tail node in the segment routing network. A SID 1 is a segment identifier of the network device 11, a SID 2 is a segment identifier of the network device 12, a SID 3 is a segment identifier of the network device 13, and a SID 4 is a segment identifier of the network device 14.

After receiving a second packet, the network device 11 (which is a first network device) adds an SRH to the second packet. As shown as ①, the SRH includes a segment identifier list and an SL, the segment identifier list is (SID 2, SID 4, SID 3), SL=2, and the SL indicates the SID 2 in the segment identifier list. The segment identifier list may be logically divided into a primary SID list (SID 2), a first secondary SID list (SID 4), and another SID list (SID 3). The secondary SID list is adjacent to the primary SID list. To be specific, a value of an SL corresponding to the 1^{st} SID in the secondary SID list is a value of an SL corresponding to the last SID in the primary SID list minus 1. A service corresponding to the SID 2 of the network device 12 is a service 2. To be specific, the network device provides, by using the SID 2, the service 2 for a packet transmitted in the segment routing network, for example, anti-virus filtering. A service corresponding to the SID 4 of the network device 14 is also the service 2. The segment identifier list is used, so that the first secondary SID list may back up the service provided by the primary SID list.

When determining that the SID 2 is available, the network device 11 sends a first packet to the network device 12 by using the SID 2 as a destination address.

The network device 12 receives the first packet and provides the service 2 corresponding to the SID 2 for the first packet, and may learn, from the segment list of the first packet based on an indication of the SID 2, that a destination SID is the SID 3, and send the first packet to the network device 13 by using the SID 3 as a destination address. A packet header of the packet may be briefly shown as ②.

Alternatively, when determining that the SID 2 is unavailable, the network device 11 obtains the secondary SID 4 in the first secondary SID list from the segment list of the first packet based on SL=SL-1, and sends the first packet to the network device 14 by using the SID 4 as a destination address. A packet header of the packet may be briefly shown as ③.

The network device 14 receives the first packet, where SL=1 is included in the first packet; obtains the SID 4 in the first secondary SID list from the segment list of the first packet based on the SL; provides the service 2 corresponding to the SID 4 for the first packet; sets SL=SL-1=0; learns, from the segment list of the first packet based on the reduced SL, that a sixth destination SID is the SID 3; and sends the first packet to the network device 13 by using the SID 3 as a destination address. A packet header of the packet may be briefly shown as ④.

FIG. 8 is another specific application of the method embodiments shown in FIG. 3. The application particularly describes a backup protection scenario of a tail node on a forwarding path in a segment routing network according to an embodiment of this application.

In an SRv6 network shown in FIG. 8, a network device 11 is connected to a network device 12 and a network device 15; the network device 12 is connected to a network device 13 and the network device 11; the network device 15 is connected to the network device 11 and a network device 21; the network device 21 is connected to a network device 22 and the network device 15; and the network device 13 is connected to the network device 12 and the network device 22. A SID 1 is a segment identifier of the network device 11, a SID 3 is a segment identifier of the network device 12, a SID 2 is a segment identifier of the network device 15, a SID 5 is a segment identifier of the network device 21, and a SID 6 is a segment identifier of the network device 22.

The network device 11 sends a first packet to the network device 15 by using the SID 2 as a destination address. The packet includes a segment identifier list (SID 2, SID 3, SID 5, SID 6), and the segment identifier list may be logically divided into a first SID list (SID 2), a primary SID list (SID 3), and a secondary SID list (SID 5, SID 6). The secondary SID list is adjacent to the primary SID list. To be specific, a value of an SL corresponding to the 1^{st} SID in the secondary SID list is a value of the last SL in the primary SID list minus 1. A forwarding path indicated by the secondary SID list: the network device 21 -> the network device 22 is a backup of a primary forwarding path indicated by the primary SID list: the network device 12. In other words, an end-to-end forwarding path indicated by the segment identifier list (SID 2, SID 3, SID 5, SID 6) is the network device 11 -> the network device 15 -> the network device 12.

The network device 15 receives the first packet, and a packet header of the packet is briefly shown as ①. The network device obtains the SID 2, and provides a service corresponding to the SID 2 for the first packet. The network device 15 learns, from the SID list of the first packet based on SL=SL-1, that an unexecuted SID in the primary SID list is the SID 3, and uses the SID 3 as a target SID. When determining that the SID 3 is available, the network device 15 may use the SID 3 as a destination address, and send the first packet to the network device 12 based on the SID 3. A packet header of the packet may be briefly shown as ②.

The network device 12 receives the first packet, and learns that the target SID is the SID 3. In this case, when the SID 3 is any one of an endpoint (Endpoint, END) SID, an endpoint with layer-3 cross-connect (Endpoint with Layer-3 cross-connect, End.X) SID, or an endpoint with specific IPv6 table lookup (Endpoint with Specific IPv6 table lookup, End.T) SID, or another type of SID, the SID 3 may have a special newly defined ultimate segment decapsulation (ultimate segment decapsulation, USD) function, regardless of whether there is another SID in the plurality of segment identifier lists. After an outer IPv6 header and an SRH are stripped, the packet is sent to a destination end through table lookup based on a payload part.

Alternatively, when determining that the SID 3 is unavailable, the network device 15 obtains the secondary SID 5 in the first secondary SID list from the SID list of the first packet based on SL=SL-1=2, and sends the first packet to the network device 21 by using the SID 5 as a destination address.

The network device 21 receives the first packet. A packet header of the first packet may be briefly shown as ④, and SL=2. The network device 21 obtains the SID 5. The SID 5 is a node SID or a link SID of the network device 21, and is a SID for guiding the forwarding path. Therefore, after determining that the SID 5 can be successfully executed, the network device 21 learns, from the segment identifier list based on SL=SL-1=1, that a next secondary SID in the first secondary SID list is the SID 6, and sends the first packet to the network device 22 by using the SID 6 as a destination address. A packet header of the packet may be briefly shown as ⑤. The network device 22 receives the first packet, and obtains the SID 6. In this case, when the SID 6 is any one of an endpoint (Endpoint, END) SID, an endpoint with layer-3 cross-connect (Endpoint with Layer-3 cross-connect, End.X) SID, or an endpoint with specific IPv6 table lookup (Endpoint with Specific IPv6 table lookup, End.T) SID, or another type of SID, the SID 6 may have a special ultimate segment decapsulation (ultimate segment decapsulation, USD) function, regardless of whether there is another SID in the plurality of segment identifier lists. After the outer IPv6 header and SRH are stripped, the packet is sent to the destination end through table lookup based on the payload part.

The SID may be a newly defined type of SID having a new function. This type of SID is used to strip the outer IPv6 header including the SRH from the packet, searches for a route on the network device based on a destination address in lower-layer IPv6 encapsulation, and sends the packet to a corresponding CE device. This type of SID is defined to be similar to an endpoint with decapsulation and specific IPv6 table lookup (Endpoint with decapsulation and specific IPv6 table lookup, END.DT6) SID. A difference is that the END.DT6 SID needs to be the last SID in a SID list of an SRH, but in this solution, this type of SID does not need to be the last SID in a SID list of an SRH.

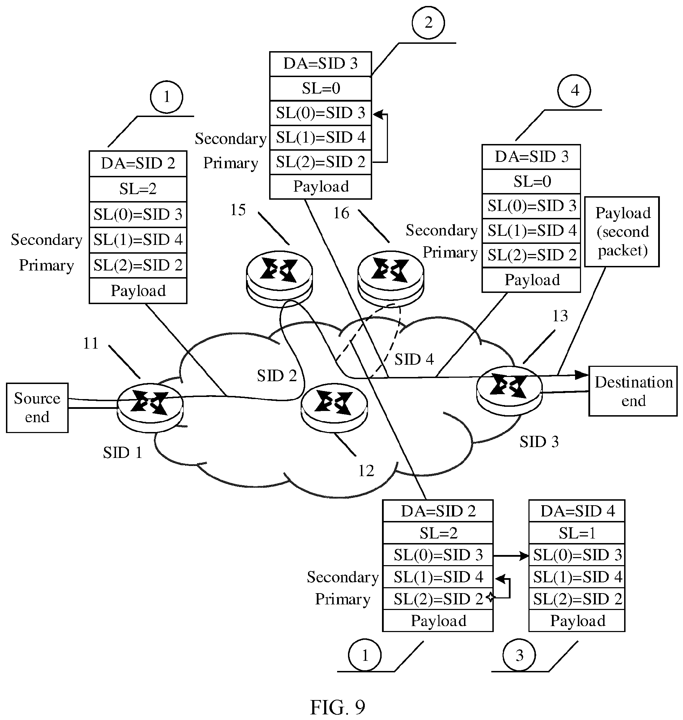

FIG. 9 is another specific application of the method embodiments shown in FIG. 3. The application particularly describes a backup protection scenario of a service provided by a network device on a forwarding path in a segment routing network according to an embodiment of this application.

In an SRv6 network shown in FIG. 9, a network device 11 is connected to a network device 12; the network device 12 is connected to the network device 11, a network device 15, a network device 16, and a network device 13; the network device 15 is connected to the network device 12; the network device 16 is connected to the network device 12; and the network device 13 is connected to the network device 12. A SID 1 is a segment identifier of the network device 11, and a SID 2 and a SID 4 are segment identifiers of the network device 12. The SID 2 corresponds to providing a service through the network device 15, and the SID 4 corresponds to providing, through the network device 16, the same service as that provided through the network device 15. A SID 3 is a segment identifier of the network device 13.

The network device 11 receives a second packet sent by a source end, and adds an SRH to the second packet. The SRH includes a SID list and an SL. A packet header of the packet may be briefly shown as ①. The SID list is (SID 2, SID 4, SID 3), and SL=2. The segment identifier list may be logically divided into a plurality of SID lists, including a primary SID list (SID 2), a secondary SID list (SID 4), and another SID list (SID 3). The secondary SID list is adjacent to the primary SID list. To be specific, a value of an SL corresponding to the 1^{st} SID in the secondary SID list is a value of the last SL in the primary SID list minus 1. The primary SID list and the secondary SID list are carried in the segment identifier list of the packet, so that the service corresponding to the SID 4 provides a backup for the service corresponding to the SID 2.

The network device 11 sends the packet to the network device 12 based on the SID 2. After receiving the packet, the network device 12 determines whether the service corresponding to the SID 2 is available, and sends the packet to the network device 15 to provide the corresponding service. When no fault occurs during execution of the corresponding service by the network device 15, the packet is sent to the network device 12. The network device 12 skips the SID 4 based on an indication of the SID 2, learns that a destination SID is the SID 3, and sends the packet to the network device 13 by using the SID 3 as a DA of the packet. A packet header of the packet may be briefly shown as ②.

If the network device 12 determines that the service corresponding to the SID 2 is unavailable, the network device may obtain the 1^{st} SID, namely, the SID 4, in the secondary SID list based on SL=SL- -, and send the packet to the network device 16 based on the SID. A packet header of the packet is shown as ③. In addition, the network device 16 provides the corresponding service for the packet. After providing the corresponding service for the packet, the network device 16 may send the packet to the network device 12. The network device 12 learns, based on the SL- -, that a new destination SID is the SID 3, and sends the packet to the network device 13 based on the SID 3. A packet header of the packet may be briefly shown as ④.

In the foregoing examples in FIG. 7 to FIG. 9, because the primary SID list includes only one SID, location information in the packet may include the SID in the primary SID list, namely, a unique SID in a primary SID list in the application scenarios in FIG. 7 to FIG. 9.

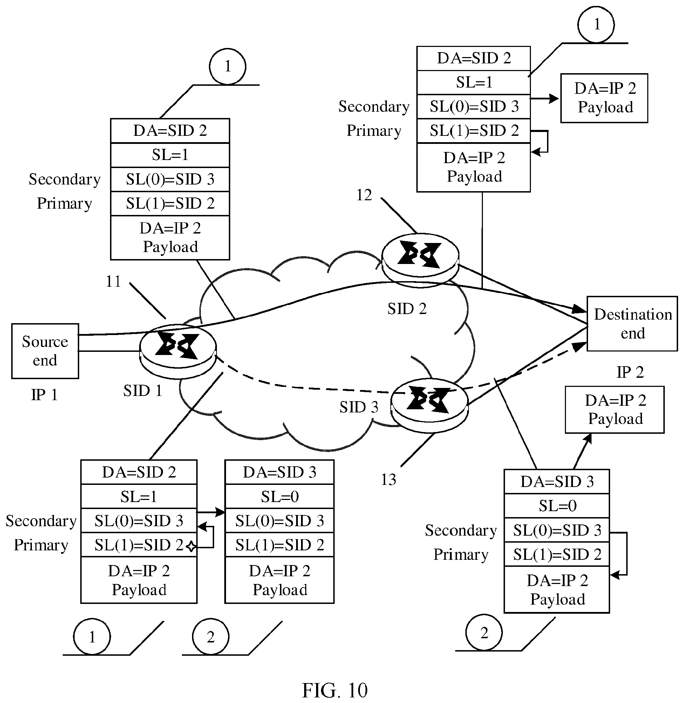

FIG. 10 is another specific application of the method embodiments shown in FIG. 3. The application particularly describes a backup protection scenario of a tail node on a forwarding path in a segment routing network according to an embodiment of this application. Details are as follows: In an SRv6 network shown in FIG. 10, a network device 11 is connected to a network device 12 and a network device 13, the network device 12 is connected to the network device 11, and the network device 13 is connected to the network device 11. A SID 1 is a segment identifier of the network device 11, a SID 2 is a segment identifier of the network device 12, and a SID 3 is a segment identifier of the network device 13.

The network device 11 receives a second packet sent by a source end, and adds an SRH to the second packet. The SRH includes a SID list and an SL. A packet header of the packet may be briefly shown as ①. The SID list in the packet is (SID 2, SID 3), SL=1, and the SL indicates the SID 2 in the SID list. The SID list may be logically divided into a primary SID list (SID 2) and a secondary SID list (SID 3). The secondary SID list is adjacent to the primary SID list. To be specific, a value of an SL corresponding to the 1^{st} SID in the secondary SID list is a value of the last SL in the primary SID list minus 1. Protection of a tail node in the segment routing network is implemented in a manner of carrying primary and secondary SIDs in the SID list. To be specific, in the application scenario shown in FIG. 10, a primary forwarding path is the network device 12, a secondary forwarding path is the network device 13, and an end-to-end primary forwarding path is the network device 11 -> the network device 12. The network device 11 learns that a target SID is the SID 2, and determines whether the SID 2 is available. In this scenario, the SID 2 being available means that the SID 2 is reachable. When it is determined that the SID 2 is available, the packet is sent to the network device 12. A packet header of the packet may be briefly shown as ①. After receiving the packet, the network device 12 performs, based on the SID 2, an action of stripping the SRH header from the packet, learns that a destination address is an IP 2, and sends the packet based on the IP 2. In other words, in this scenario, the SID 2 is a SID having a special function. The SID may be a newly defined type of SID having a new function. This type of SID is used to strip an outer IPv6 header including the SRH from the packet, searches for a route on the network device based on a destination address in lower-layer IPv6 encapsulation, and sends the packet to a corresponding CE device. This type of SID is defined to be similar to an endpoint with decapsulation and specific IPv6 table lookup (Endpoint with decapsulation and specific IPv6 table lookup, END.DT6) SID. A difference is that the END.DT6 SID needs to be the last SID in a SID list of an SRH, but in this solution, this type of SID does not need to be the last SID in a SID list of an SRH.

When determining that the SID 2 is unavailable, the network device 11 selects the SID 3 as a destination SID based on the SL- -, and sends the packet to the network device 13 based on the SID 3. A packet header of the packet may be briefly shown as ②. After receiving the packet, the network device 12 determines that the SID 3 is a SID of the network device 12, strips the SRH header based on the SID, learns that a DA is the IP 2, and sends the packet based on the IP 2. The SID may be the END.DT6 SID or the newly defined type of SID.

In the example shown in FIG. 10, because the primary SID list includes only one SID, and the secondary SID also includes only one SID, it may be considered that the packet does not carry location indication information. In other words, in this embodiment of this application, the location indication information is optional.

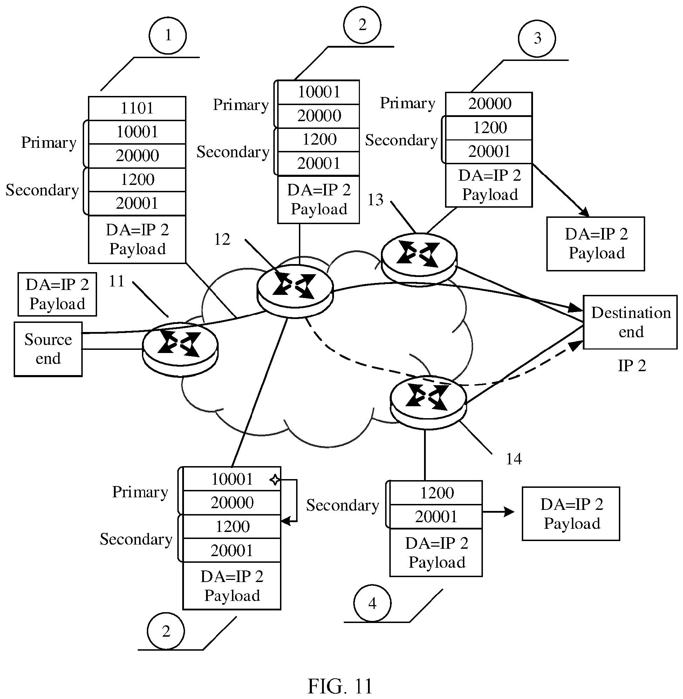

FIG. 11 is another specific application of the method embodiments shown in FIG. 3. The application particularly describes a backup protection scenario in which embodiments of this application are applied to SR-MPLS. Details are as follows:
In the SR-MPLS network shown in FIG. 11, a network device 11 is connected to a network device 12; the network device 12 is connected to the network device 11, a network device 13, and a network device 14; the network device 13 is connected to the network device 12; and the network device 14 is connected to the network device 12. A SID 1101 is a SID of the network device 12, two SIDs of the network device 13 are respectively 10001 and 20000, and two SIDs of the network device 14 are respectively 1200 and 20001.

The network device 11 receives a second packet sent by a source end, and adds an MPLS packet header to the second packet. A label stack of the packet header, namely, a segment identifier list, is (1101, 10001, 20000, 1200, 20001), and the list may be logically divided into another SID list (1101), a primary SID list (10001, 20000), and a secondary SID list (1200, 20001). In other words, a primary forwarding path is the network device 13, a secondary forwarding path is the network device 14, an end-to-end primary forwarding path is the network device 12 -> the network device 13, and an end-to-end secondary forwarding path is the network device 12 -> the network device 14. The secondary SID list is adjacent to the primary SID list. To be specific, in the label stack of the MPLS packet header, the secondary SID list is after the primary SID list.

The network device 11 sends a first packet to the network device 12 based on the SID 1101 at the top of the stack. An MPLS packet header of the packet is briefly shown as ①.

The network device 12 receives the first packet; pops the label 1101, where a packet header obtained after the label is popped may be briefly shown as ②; determines that a target SID in the primary SID list is 10001; and determines whether the target SID is available. When it is determined that 10001 is available, the first packet is sent to the network device 13 based on 10001.

The network device 13 receives the first packet, and a packet header of the packet may be briefly shown as ③. A SID at the top of the label stack is 20000. Therefore, the network device 13 removes the MPLS packet header of the first packet based on the SID at the top of the stack, and sends the second packet to a destination end. When a virtual private network (virtual private network, VPN) private network label 20000 is allocated on the protected node network device 13, forwarding behavior thereof may be defined: three layers of labels are continuously popped, a private network routing table is queried based on an inner private network IP address, and the packet continues to be forwarded to a destination device based on a private network route. If the destination end is unreachable, the SID 20000 is popped to obtain the 1^{st} secondary SID 1200, and the first packet is sent to the network device 14 based on the SID. A packet header of the packet may be briefly shown as ④.

Alternatively, when determining that 10001 is unavailable, the network device 12 learns that a quantity of unexecuted SIDs in the primary SID list is 1; performs popping on the label stack twice consecutively or obtains the 1^{st} SID in the secondary SID list, where in other words, a destination SID is 1200; and sends the first packet to the network device 14 based on the SID 1200. A packet header of the packet may be briefly shown as ④.

The network device 14 receives the first packet, pops the SID 1200 at the top of the stack to obtain the SID 20001, removes the MPLS packet header in the first packet based on 20001, and sends the second packet to the destination end.

In the example shown in FIG. 11, for an application in the SR-MPLS network, location indication information in the packet includes the SID in the primary SID list. To facilitate implementation of the technical solution in embodiments of this application in the SR-MPLS network, it may be required that segment routing global blocks (segment routing global block, SRGB) of all nodes in the SR-MPLS network have a same range, for example, 1000 to 10000, so that a meaning of a global label in the label stack carried in the packet can be understood consistently at different network locations.

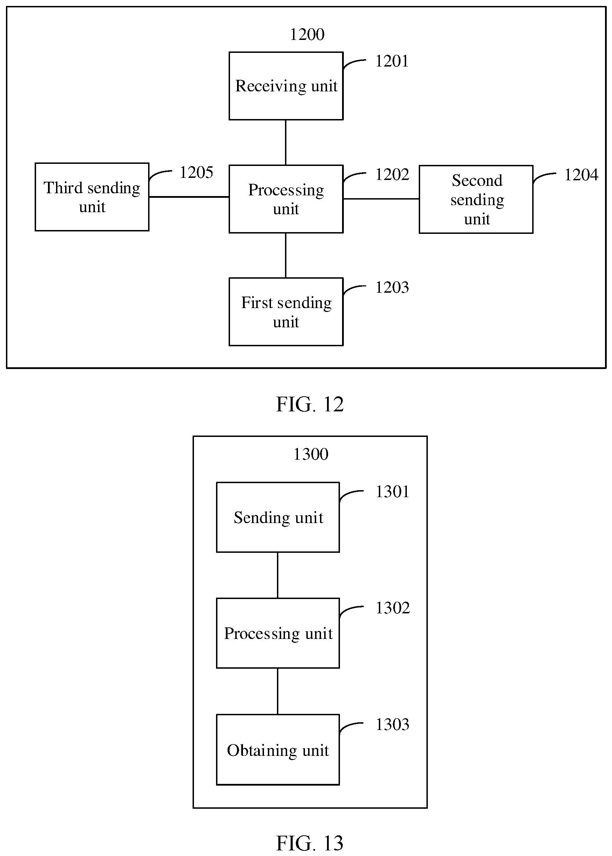

Refer to FIG. 12. An embodiment of this application provides a packet processing apparatus 1200, applied to a segment routing network. The apparatus 1200 may be deployed on any network device provided in the embodiment shown in FIG. 1, FIG. 2, FIG. 3, FIG. 4, FIG. 7, FIG. 8, FIG. 9, FIG. 10, or FIG. 11. For example, the apparatus 1200 may be deployed on the first network device, the second network device, the third network device, or the fourth network device provided in the embodiment shown in FIG. 3, or may be deployed on the network device 1, the network device 2, the network device 3, the network device 4, the network device 5, the network device 6, the network device 7, the network device 8, or the like provided in the embodiment shown in FIG. 4. Details are not described herein again in this application. The apparatus 1200 includes:
a receiving unit 1201, configured to receive a first packet, where the first packet includes a plurality of segment identifier SID lists, the plurality of SID lists include a primary SID list and at least one secondary SID list, the at least one secondary SID list includes a first secondary SID list, and the first secondary SID list is a backup of the primary SID list; and
a processing unit 1202, configured to process the first packet based on the primary SID list.

Optionally, for a detailed implementation process in which the processing unit 1202 processes the first packet, refer to S104 and related content in the details of the step in the embodiment shown in FIG. 3.

Optionally, the processing unit 1202 is configured to:
perform different processing on the first packet based on whether a target SID is available, where the target SID is one or more unexecuted SIDs in the primary SID list.

Optionally, a forwarding path indicated by the first secondary SID list is a backup path of a forwarding path indicated by the primary SID list.

Optionally, the target SID being available includes:
a network device corresponding to the target SID is reachable for the apparatus 1200.

Optionally, the apparatus further includes a first sending unit 1203. The first sending unit 1203 is configured to send the first packet based on a first SID when the target SID is unavailable. The first SID is the 1^{st} SID in the first secondary SID list.

Optionally, the apparatus 1200 is an intermediate node on an end-to-end primary forwarding path indicated by the plurality of SID lists, the target SID is the last SID in the primary SID list, the target SID is a SID of the apparatus 1200, and the apparatus 1200 further includes a second sending unit 1204.

The second sending unit 1204 is configured to send the first packet based on a first SID when the target SID is available, where the first SID is the 1^{st} SID after the at least one secondary SID list in the plurality of SID lists.

Optionally, the apparatus 1200 is a tail node on an end-to-end primary forwarding path indicated by the plurality of SID lists, the target SID is the last SID in the primary SID list, and the target SID is a SID of the apparatus 1200.

The processing unit 1202 is configured to: when the target SID is available, perform a function corresponding to the target SID, and strip the plurality of SID lists.

Optionally, for a detailed implementation process in which the processing unit 1202 strips the plurality of SID lists, refer to related content in S1062 in the embodiment shown in FIG. 3.

Optionally, a service corresponding to the first secondary SID list is a backup of a service corresponding to the primary SID list, and the target SID being available includes that a service corresponding to the target SID is available.

Optionally, the processing unit 1202 is configured to: when the target SID is unavailable, provide a service for the first packet by using a first SID, where the first SID is the 1^{st} SID in the first secondary SID list.

Optionally, the apparatus 1200 is an intermediate node on an end-to-end primary forwarding path indicated by the plurality of SID lists, the target SID is the 1^{st} SID in the unexecuted SIDs, and the apparatus 1200 further includes a third sending unit 1205.

The processing unit 1202 is configured to: when the target SID is available, provide the service corresponding to the target SID.

The third sending unit 1205 is configured to send the first packet based on a first SID, where the first SID is the 1^{st} SID after the at least one secondary SID list in the plurality of SID lists.

Optionally, for detailed implementation processes in which the processing unit 1202 provides the service corresponding to the target SID and the third sending unit 1205 sends the first packet, refer to S104 and related content in the details of the step in the embodiment shown in FIG. 3.

Optionally, the apparatus 1200 is a tail node on an end-to-end primary forwarding path indicated by the plurality of SID lists, and the target SID is the last SID in the unexecuted SIDs.

The processing unit 1202 is configured to: when the target SID is available, provide the service corresponding to the target SID, and strip the plurality of SID lists.

Optionally, the first packet includes location indication information, and the processing unit 1202 is further configured to:
obtain the first SID based on the location indication information, where the location indication information is used to indicate one or more of the following: a location of the primary SID list in the plurality of SID lists, a location of the first secondary SID list in the plurality of SID lists, and a location of the at least one secondary SID list in the plurality of SIDs.

Optionally, the location indication information includes the last SID in the primary SID list and/or the 1^{st} SID in the unexecuted SIDs in the primary SID list.

Optionally, the location indication information is carried in metadata of a segment routing header of the first packet.

Optionally, the receiving unit 1201 is further configured to receive a configuration instruction.

The processing unit 1202 is further configured to perform, based on the configuration instruction, an action of obtaining a second SID based on whether the target SID is available.

The processing unit 1202 is configured to process the first packet based on the second SID, where the second SID includes a SID in the primary SID list, the 1^{st} SID in the first secondary SID list, or the 1^{st} SID after the at least one secondary SID list in the plurality of SID lists.

Optionally, for a detailed implementation process in which the processing unit 1202 performs, based on the configuration instruction, the action of obtaining the second SID based on whether the target SID is available, refer to S104 and related content in the details of the step in the embodiment shown in FIG. 3.

Optionally, the plurality of SID lists are in a segment routing header SRH of the first packet, or the plurality of SID lists are in a multi-protocol label switching header of the first packet.

Optionally, the primary SID list and the first secondary SID list are in different SRHs of the first packet.

Optionally, the primary SID list is adjacent to the first secondary SID list, and the last SID in the primary SID list is before the first secondary SID list.

Optionally, the at least one secondary SID list further includes a second secondary SID list, and the second secondary SID list is a backup of the first secondary SID list and/or the second secondary SID list is a backup of the primary SID list.

Optionally, the plurality of SID lists further includes another primary SID list and another secondary SID list, and the another secondary SID list is a backup of the another primary SID list.

Optionally, the another primary SID list and the primary SID list belong to different segments.

In this embodiment of this application, the receiving unit receives the first packet. The first packet includes the plurality of segment identifier SID lists, and the plurality of SID lists include the primary SID list and the at least one secondary SID list. The at least one secondary SID list includes the first secondary SID list, and the first secondary SID list is a backup of the primary SID list. In a process in which the processing unit processes the first packet based on the primary SID list, when a path indicated by the primary SID list is faulty, the processing unit processes the first packet based on the first secondary SID list, so that forwarding processing of the data packet continues in the segment routing network, thereby improving network transmission reliability.

Refer to FIG. 13. An embodiment of this application provides a packet processing apparatus 1300, applied to a segment routing network. The apparatus 1300 may be deployed on the network device provided in the embodiment shown in FIG. 1, FIG. 2, FIG. 3, FIG. 4, FIG. 7, FIG. 8, FIG. 9, FIG. 10, or FIG. 11. For example, the apparatus 1300 may be deployed on the first network device provided in the embodiment shown in FIG. 3, or may be deployed on the network device 1 provided in the embodiment shown in FIG. 4, or may be deployed on the network device 11 provided in the embodiment shown in FIG. 7, or may be deployed on the network device 15 provided in the embodiment shown in FIG. 8, or may be deployed on the network device 11 provided in the embodiment shown in FIG. 9 or FIG. 10, or may be deployed on the network device 12 provided in the embodiment shown in FIG. 11. The apparatus 1300 includes:
a sending unit 1301, configured to send a first packet, where the first packet includes a plurality of segment identifier SID lists, the plurality of SID lists include at least a primary SID list and at least one secondary SID list, the at least one secondary SID list includes a first secondary SID list, and the first secondary SID list is a backup of the primary SID list.

Optionally, the apparatus 1300 further includes a processing unit 1302, and the processing unit 1302 is configured to generate the first packet.

For a detailed implementation process in which the processing unit 1302 generates the first packet, refer to related content in S102 in the embodiment shown in FIG. 3. For a detailed implementation process in which the sending unit 1301 sends the first packet, refer to related content in S103 in the embodiment shown in FIG. 3.

Optionally, the apparatus 1300 further includes an obtaining unit 1303. The obtaining unit 1303 is configured to obtain the plurality of segment identifier lists. For a detailed implementation process in which the obtaining unit 1303 obtains the plurality of segment identifier lists, refer to related content in S101 in the embodiment shown in FIG. 3.

Optionally, the first packet includes location indication information, and the location indication information is used to indicate one or more of the following: a location of the primary SID list in the plurality of SID lists, a location of the first secondary SID list in the plurality of SID lists, and a location of the at least one secondary SID list in the plurality of SIDs.

Optionally, the location indication information includes the last SID in the primary SID list and/or the 1^{st} SID in unexecuted SIDs in the primary SID list.

Optionally, the location indication information is carried in metadata of a segment routing header of the first packet.

Optionally, the plurality of SID lists are carried in a segment routing header SRH of the first packet, or the plurality of SID lists are carried in a multi-protocol label switching MPLS header of the first packet.

Optionally, the primary SID list is adjacent to the first secondary SID list, and the last SID in the primary SID list is before the first secondary SID list.

Optionally, the at least one secondary SID list further includes a second secondary SID list, and the second secondary SID list is a backup of the first secondary SID list and/or the second secondary SID list is a backup of the primary SID list.

In this embodiment of this application, the sending unit sends the first packet. The first packet includes the plurality of segment identifier SID lists, and the plurality of SID lists include at least the primary SID list and the at least one secondary SID list. The at least one secondary SID list includes the first secondary SID list, and the first secondary SID list is a backup of the primary SID list. Because the first secondary SID list in the first packet is a backup of the primary SID list, when a path indicated by the primary SID list is faulty, a network device in the segment routing network processes the first packet based on the first secondary SID list, so that forwarding processing of the data packet continues in the segment routing network, thereby improving network transmission reliability.

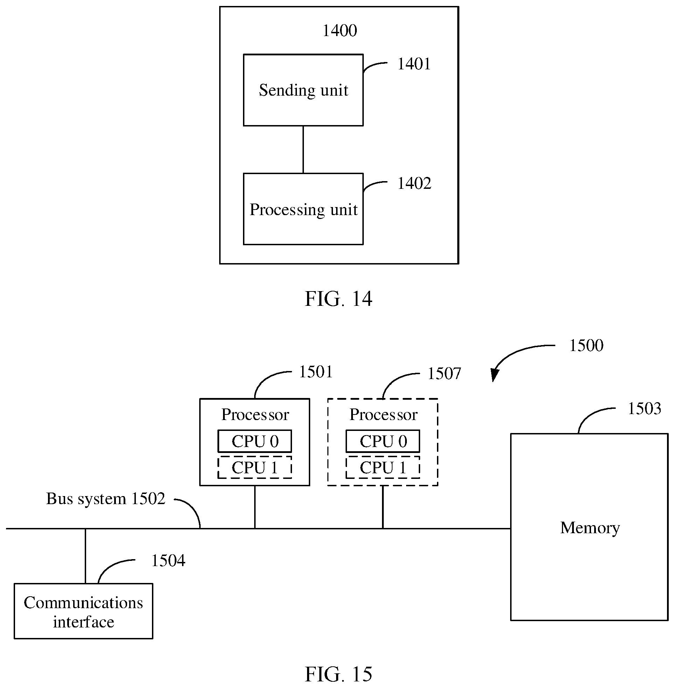

Refer to FIG. 14. An embodiment of this application provides a packet processing apparatus 1400, applied to a segment routing network. The apparatus 1400 may be deployed on the control device or the path computation element provided in the embodiment shown in FIG. 1 or FIG. 3. The apparatus 1400 includes:
a sending unit 1401, configured to send a first message to a first network device, where the first message includes a plurality of segment identifier SID lists, the plurality of SID lists include a primary SID list and at least one secondary SID list, the at least one secondary SID list includes a first secondary SID list, and the first secondary SID list is a backup of the primary SID list.

The first message enables the first network device to generate a first packet, and the first packet includes the plurality of SID lists.

Optionally, the apparatus 1400 further includes a processing unit 1402, and the processing unit 1402 is configured to generate the first message.

For detailed implementation processes in which the processing unit 1402 generates the first message and the sending unit 1401 sends the first message, refer to related content in S101 in the embodiment shown in FIG. 3.

Optionally, the first message further includes a packet feature or a routing feature, and the first packet conforms to the packet feature or the routing feature.

Optionally, the first message further includes location indication information, and the location indication information is used to indicate one or more of the following: a location of the primary SID list in the plurality of SID lists, a location of the first secondary SID list in the plurality of SID lists, and a location of the at least one secondary SID list in the plurality of SIDs.

Optionally, the location indication information includes the last SID in the primary SID list and/or the 1^{st} SID in unexecuted SIDs in the primary SID list.

In this embodiment of this application, the sending unit sends the first message to the first network device. The first message includes the plurality of segment identifier SID lists, and the plurality of SID lists include the primary SID list and the at least one secondary SID list. The at least one secondary SID list includes the first secondary SID list, and the first secondary SID list is a backup of the primary SID list. In this way, when the first network device generates the first packet, the first packet may include the plurality of SID lists. In other words, the generated first packet includes the primary SID list and the first secondary SID list. Because the first secondary SID list is a backup of the primary SID list, when a path indicated by the primary SID list is faulty, the first network device processes the first packet based on the first secondary SID list, so that forwarding processing of the data packet continues in the segment routing network, thereby improving network transmission reliability.

Refer to FIG. 15. An embodiment of this application provides a schematic diagram of a packet processing apparatus 1500, applied to a segment routing network. The apparatus 1500 may be the first network device, the second network device, the third network device, or the fourth network device provided in the embodiment shown in FIG. 3, or may be the network device 1, the network device 2, the network device 4, or the like provided in the embodiment shown in FIG. 4, or may be the network device 11, the network device 12, or the like provided in the embodiment shown in FIG. 7, or may be the network device 15, the network device 12, or the like provided in the embodiment shown in FIG. 8, or may be the network device 11 or the like provided in the embodiment shown in FIG. 9, or may be the network device 11, the network device 12, or the like provided in the embodiment shown in FIG. 10, or may be the network device 12, the network device 13, or the like provided in the embodiment shown in FIG. 11.

The apparatus 1500 includes at least one processor 1501, a bus system 1502, a memory 1503, and at least one communications interface 1504.

The apparatus 1500 is an apparatus of a hardware structure, and may be configured to implement function modules in the apparatus 1200 shown in FIG. 12. For example, a person skilled in the art may figure out that the processing unit 1202 in the apparatus 1200 shown in FIG. 12 may be implemented by invoking code in the memory 1503 by the at least one processor 1501, and the receiving unit 1201, the first sending unit 1203, and the second sending unit 1204 in the apparatus 1200 shown in FIG. 12 may be implemented by using the communications interface 1504.

Optionally, the processor 1501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The bus system 1502 may include a path for transmitting information between the foregoing components.

The communications interface 1504 is configured to communicate with another device or a communications network.

The memory 1503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM), or another compact disc storage, an optical disc storage (including a compact disc, a laser disc, an optical disc, a digital versatile disc, a Blu-ray disc, or the like), a disk storage medium or another disk storage device, or any other medium that can be used to carry or store expected program code in a form of an instruction or a data structure and that can be accessed by a computer, but this is not limited herein. The memory may exist independently, and be connected to the processor through a bus. Alternatively, the memory may be integrated with the processor.

The memory 1503 may exist independently, and be connected to the processor 1501 through the communications bus 1502. The memory 1503 may alternatively be integrated into the processor 1501.

Optionally, the memory 1503 is configured to store program code or instructions for executing the solutions of this application, and the processor 1501 controls execution. The processor 1501 is configured to execute the program code stored in the memory 1503. The program code may include one or more software modules. Optionally, the processor 1501 may also store program code or instructions for executing the solutions of this application.

In a specific implementation, in an embodiment, the processor 1501 may include one or more CPUs, for example, a CPU 0 and a CPU 1 in FIG. 15.

In a specific implementation, in an embodiment, the apparatus 1500 may include a plurality of processors, for example, the processor 1501 and a processor 1507 in FIG. 15. Each of the processors may be a single-core (single-CPU) processor or a multi-core (multi-CPU) processor. The processor herein may refer to one or more devices, circuits, and/or processing cores configured to process data (for example, computer program instructions).

The communications interface 1504 is configured to use any apparatus such as a transceiver to communicate with another device or communications network. The communications network may be the Ethernet, a radio access network (RAN), a wireless local area network (wireless local area network, WLAN), or the like. In this embodiment of this application, the communications interface 1504 may be configured to receive a packet sent by another network device in a segment routing network, or send a packet to the another network device in the segment routing network. The communications interface 504 may be an Ethernet (Ethernet) interface, a fast Ethernet (Fast Ethernet, FE) interface, or a gigabit Ethernet (Gigabit Ethernet, GE) interface.

It should be understood that the foregoing product forms of the network devices have any function of the network devices in the foregoing packet processing method embodiments, and details are not described herein.

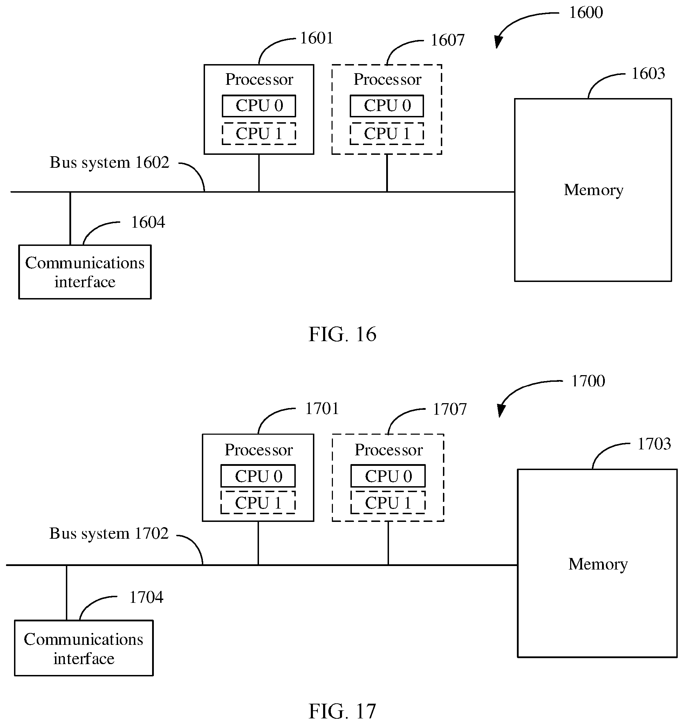

Refer to FIG. 16. An embodiment of this application provides a schematic diagram of a packet processing apparatus 1600. The apparatus 1600 may be any one of the network devices provided in the embodiment shown in FIG. 1, FIG. 2, FIG. 3, FIG. 4, FIG. 7, FIG. 8, FIG. 9, FIG. 10, or FIG. 11. For example, the apparatus 1600 may be the first network device provided in the embodiment shown in FIG. 3, or may be the network device 1 provided in the embodiment shown in FIG. 4, or may be the network device 11 provided in the embodiment shown in FIG. 7, or may be the network device 15 provided in the embodiment shown in FIG. 8, or may be the network device 11 provided in the embodiment shown in FIG. 9 or FIG. 10, or may be the network device 12 provided in the embodiment shown in FIG. 11.

The apparatus 1600 includes at least one processor 1601, a bus system 1602, a memory 1603, and at least one communications interface 1604.

The apparatus 1600 is an apparatus of a hardware structure, and may be configured to implement function modules in the apparatus 1300 shown in FIG. 13. For example, a person skilled in the art may figure out that the processing unit 1302 in the apparatus 1300 shown in FIG. 13 may be implemented by invoking code in the memory 1603 by the at least one processor 1601, and the sending unit 1301 in the apparatus 1300 shown in FIG. 13 may be implemented by using the communications interface 1604.

Optionally, the processor 1601 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The bus system 1602 may include a path for transmitting information between the foregoing components.

The communications interface 1604 is configured to communicate with another device or a communications network.

The memory 1603 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM), or another compact disc storage, an optical disc storage (including a compact disc, a laser disc, an optical disc, a digital versatile disc, a Blu-ray disc, or the like), a disk storage medium or another disk storage device, or any other medium that can be used to carry or store expected program code in a form of an instruction or a data structure and that can be accessed by a computer, but this is not limited herein. The memory may exist independently, and be connected to the processor through a bus. Alternatively, the memory may be integrated with the processor.

The memory 1603 may exist independently, and be connected to the processor 1601 through the communications bus 1602. The memory 1603 may alternatively be integrated into the processor 1601.

Optionally, the memory 1603 is configured to store program code or instructions for executing the solutions of this application, and the processor 1601 controls execution. The processor 1601 is configured to execute the program code stored in the memory 1603. The program code may include one or more software modules. Optionally, the processor 1601 may also store program code or instructions for executing the solutions of this application.

In a specific implementation, in an embodiment, the processor 1601 may include one or more CPUs, for example, a CPU 0 and a CPU 1 in FIG. 16.

In a specific implementation, in an embodiment, the apparatus 1600 may include a plurality of processors, for example, the processor 1601 and a processor 1607 in FIG. 16. Each of the processors may be a single-core (single-CPU) processor or a multi-core (multi-CPU) processor. The processor herein may refer to one or more devices, circuits, and/or processing cores configured to process data (for example, computer program instructions).

The communications interface 1604 is configured to use any apparatus such as a transceiver to communicate with another device or communications network. The communications network may be the Ethernet, a radio access network (RAN), a wireless local area network (wireless local area network, WLAN), or the like. In this embodiment of this application, the communications interface 1604 may be configured to receive a packet sent by another network device in a segment routing network, or send a packet to the another network device in the segment routing network. The communications interface 604 may be an Ethernet (Ethernet) interface, a fast Ethernet (Fast Ethernet, FE) interface, or a gigabit Ethernet (Gigabit Ethernet, GE) interface.

It should be understood that the foregoing product forms of the network devices have any function of the network devices in the foregoing packet processing method embodiments, and details are not described herein.

Refer to FIG. 17. An embodiment of this application provides a schematic diagram of a packet processing apparatus 1700, applied to a segment routing network. The apparatus 1700 may be the control device or the path computation element provided in the embodiment shown in FIG. 1 or FIG. 3. The apparatus 1700 includes at least one processor 1701, a bus system 1702, a memory 1703, and at least one communications interface 1704.

The apparatus 1700 is an apparatus of a hardware structure, and may be configured to implement function modules in the apparatus 1400 shown in FIG. 14. For example, a person skilled in the art may figure out that the processing unit 1402 in the apparatus 1400 shown in FIG. 14 may be implemented by invoking code in the memory 1703 by the at least one processor 1701, and the sending unit 1401 in the apparatus 1400 shown in FIG. 14 may be implemented by using the communications interface 1704.

Optionally, the processor 1701 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The bus system 1702 may include a path for transmitting information between the foregoing components.

The communications interface 1704 is configured to communicate with another device or a communications network.

The memory 1703 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM), or another compact disc storage, an optical disc storage (including a compact disc, a laser disc, an optical disc, a digital versatile disc, a Blu-ray disc, or the like), a disk storage medium or another disk storage device, or any other medium that can be used to carry or store expected program code in a form of an instruction or a data structure and that can be accessed by a computer, but this is not limited herein. The memory may exist independently, and be connected to the processor through a bus. Alternatively, the memory may be integrated with the processor.

The memory 1703 may exist independently, and be connected to the processor 1701 through the communications bus 1702. The memory 1703 may alternatively be integrated into the processor 1701.

Optionally, the memory 1703 is configured to store program code or instructions for executing the solutions of this application, and the processor 1701 controls execution. The processor 1701 is configured to execute the program code stored in the memory 1703. The program code may include one or more software modules. Optionally, the processor 1701 may also store program code or instructions for executing the solutions of this application.

In a specific implementation, in an embodiment, the processor 1701 may include one or more CPUs, for example, a CPU 0 and a CPU 1 in FIG. 17.

In a specific implementation, in an embodiment, the apparatus 1700 may include a plurality of processors, for example, the processor 1701 and a processor 1707 in FIG. 17. Each of the processors may be a single-core (single-CPU) processor or a multi-core (multi-CPU) processor. The processor herein may refer to one or more devices, circuits, and/or processing cores configured to process data (for example, computer program instructions).

The communications interface 1704 is configured to use any apparatus such as a transceiver to communicate with another device or communications network. The communications network may be the Ethernet, a radio access network (RAN), a wireless local area network (wireless local area network, WLAN), or the like. In this embodiment of this application, the communications interface 1704 may be configured to receive a packet sent by another network device in a segment routing network, or send a packet to the another network device in the segment routing network. The communications interface 1704 may be an Ethernet (Ethernet) interface, a fast Ethernet (Fast Ethernet, FE) interface, or a gigabit Ethernet (Gigabit Ethernet, GE) interface.

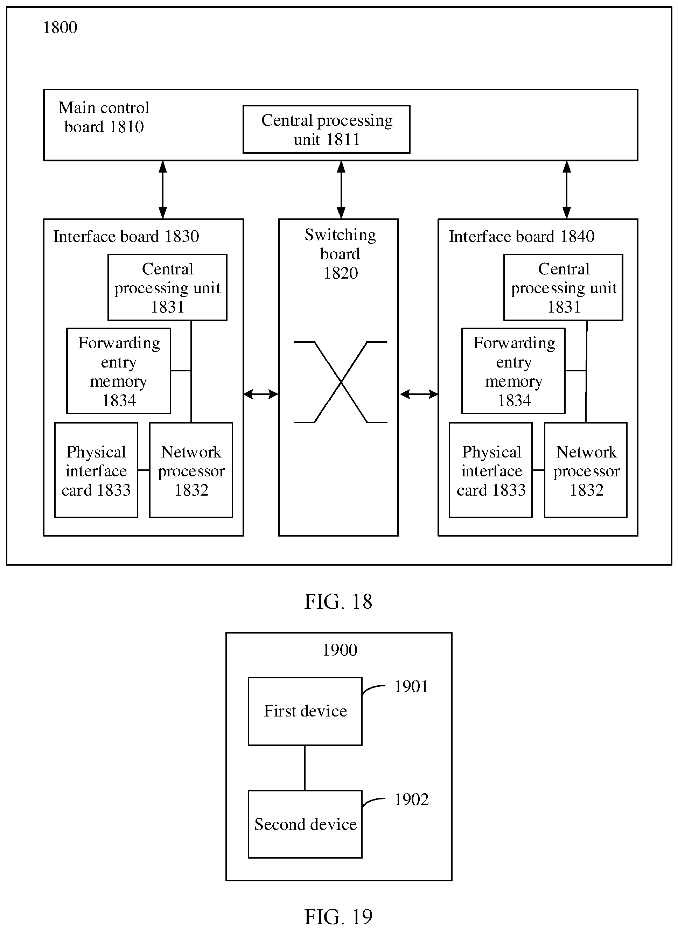

FIG. 18 is a schematic diagram of a structure of an apparatus 1800 according to an embodiment of this application. The apparatus 1800 may be any one of the network devices provided in the embodiment shown in FIG. 1, FIG. 2, FIG. 3, FIG. 4, FIG. 7, FIG. 8, FIG. 9, FIG. 10, or FIG. 11. Refer to the schematic diagram of the structure of the device shown in FIG. 18. The apparatus 1800 includes a main control board and one or more interface boards. The main control board and the interface boards are communicatively connected. The main control board is also referred to as a main processing unit (main processing unit, MPU) or a route processor card (route processor card). The main control board is responsible for controlling and managing each component in the apparatus 1800, including route computation, device management, and function maintenance. The interface board is also referred to as a line processing unit (line processing unit, LPU) or a line card (line card), and is configured to forward data. In some embodiments, the apparatus 1800 may also include a switching board. The switching board is communicatively connected to the main control board and the interface boards. The switching board is configured to forward data between the interface boards. The switching board may also be referred to as a switch fabric unit (switch fabric unit, SFU). The interface board includes a central processing unit, a memory, a forwarding chip, and a physical interface card (physical interface card, PIC). The central processing unit is communicatively connected to the memory, a network processor, and the physical interface card. The memory is configured to store a forwarding table. The forwarding chip is configured to forward a received data packet based on the forwarding table stored in the memory. If a destination address of the data packet is an address of the apparatus 1800, the data packet is sent to the central processing unit (central processing unit, CPU), for example, a central processing unit 1831, for processing. If a destination address of the data packet is not an address of the apparatus 1800, a next hop and an outbound interface corresponding to the destination address are found from the forwarding table based on the destination address, and the data packet is forwarded to the outbound interface corresponding to the destination address. The forwarding chip may be a network processor (network processor, NP). The PIC, also referred to as a subcard, may be installed on the interface board. The PIC is responsible for converting an optical or electrical signal to a data packet, checking validity of the data packet, and forwarding the data packet to the forwarding chip for processing. In some embodiments, the central processing unit may also perform a function of the forwarding chip, for example, implement software forwarding based on a general-purpose CPU, so that the interface board does not need the forwarding chip. A communication connection between the main control board, the interface boards, and the switching board may be implemented by using a bus. In some embodiments, the forwarding chip may be implemented as an application-specific integrated circuit (application-specific integrated circuit, ASIC) or a field programmable gate array (field programmable gate array, FPGA).

Logically, the apparatus 1800 includes a control plane and a forwarding plane. The control plane includes the main control board and the central processing unit. The forwarding plane includes components for performing forwarding, such as the memory, the PIC, and the NP. The control plane performs functions such as a function of a router, generating a forwarding table, processing signaling and protocol packets, and configuring and maintaining a status of a device. The control plane delivers the generated forwarding table to the forwarding plane. On the forwarding plane, the NP searches a table based on the forwarding table delivered by the control plane to forward a packet received by the PIC of the apparatus 1800. The forwarding table delivered by the control plane may be stored in the memory. In some embodiments, the control plane and the forwarding plane may be totally separated, and are not on a same device. The following briefly describes the foregoing process with reference to the embodiment shown in FIG. 3.

As shown in the method described in FIG. 3, the second network device may transmit a plurality of first packets through a physical interface card 1833, and send the plurality of first packets to the CPU 1831 for processing. The CPU 1831 may process the first packets based on availability of target SIDs in the first packets.

It should be noted that, there may be one or more main control boards, and when there is a plurality of main control boards, the main control boards may include a primary main control board and a secondary main control board. There may be one or more interface boards. A network device with a stronger data processing capability provides more interface boards. There may also be one or more physical interface cards on the interface board. There may be no switching board, or there may be one or more switching boards. When there is a plurality of switching boards, load sharing and redundancy backup may be jointly implemented by the plurality of switching boards. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a relatively weak data exchange and processing capability. Which architecture is specifically used depends on a specific networking deployment scenario. This is not limited herein.

The network device provided in this embodiment of the present invention may correspond to any network device in the method embodiments in FIG. 1 to FIG. 11, and may implement functions of the network device and/or various steps and methods implemented by the network device in the foregoing method embodiments. The foregoing is merely a brief example description. For brevity, details are not described herein again.

FIG. 19 is a schematic diagram of a packet processing system 1900 according to an embodiment of this application. The system 1900 provided in this embodiment of this application may include the apparatus 1200 provided in the embodiment shown in FIG. 12 and the apparatus 1300 provided in the embodiment shown in FIG. 13, or may include the apparatus 1500 provided in the embodiment shown in FIG. 15 and the apparatus 1600 provided in the embodiment shown in FIG. 16, or may include the apparatus 1800 provided in the embodiment shown in FIG. 18.

The apparatus 1200 provided in the embodiment shown in FIG. 12, the apparatus 1500 provided in the embodiment shown in FIG. 15, or the apparatus 1800 provided in the embodiment shown in FIG. 18 may be referred to as a first device 1901. The apparatus 1300 provided in the embodiment shown in FIG. 13, the apparatus 1600 provided in the embodiment shown in FIG. 16, or the apparatus 1800 provided in the embodiment shown in FIG. 18 may be referred to as a second device 1902.

The first device 1901 communicates with the second device 1902.

In a possible implementation, the second device 1902 may perform method steps and related optional manners performed by the first network device in the embodiment shown in FIG. 3, and the first device 1901 may perform method steps and related optional manners performed by the second network device, the third network device, or the fourth network device in the embodiment shown in FIG. 3.

In a possible implementation, the first device 1901 may perform method steps and related optional manners performed by the network device 11 or the network device 12 provided in the embodiment shown in FIG. 7, and the second device 1902 may perform method steps and related optional manners performed by the network device 11 provided in the embodiment shown in FIG. 7.

In a possible implementation, the first device 1901 may perform method steps and related optional manners performed by the network device 15 or the network device 12 provided in the embodiment shown in FIG. 8, and the second device 1902 may perform method steps and related optional manners performed by the network device 15 provided in the embodiment shown in FIG. 8.

In a possible implementation, the first device 1901 may perform method steps and related optional manners performed by the network device 11 or the network device 12 provided in the embodiment shown in FIG. 9 or FIG. 10, and the second device 1902 may perform method steps and related optional manners performed by the network device 11 provided in the embodiment shown in FIG. 9 or FIG. 10.

In a possible implementation, the first device 1901 may perform method steps and related optional manners performed by the network device 12 or the network device 13 provided in the embodiment shown in FIG. 11, and the second device 1902 may perform method steps and related optional manners performed by the network device 12 provided in the embodiment shown in FIG. 11.

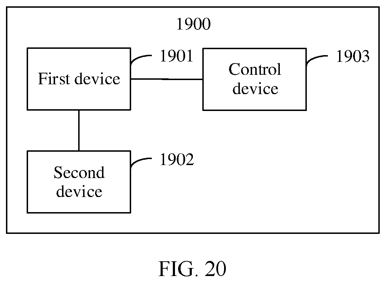

In a possible manner, refer to FIG. 20. The system 1900 further includes the apparatus 1400 provided in the embodiment shown in FIG. 14 or the apparatus 1700 provided in the embodiment shown in FIG. 17.

The apparatus 1400 provided in the embodiment shown in FIG. 14 or the apparatus 1700 provided in the embodiment shown in FIG. 17 may be a control device 1903.

The control device 1903 may perform method steps and related optional manners performed by the control device and the like in the embodiment shown in FIG. 3.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular application and a design constraint of the technical solutions. A person of ordinary skill in the art may use different methods to implement the described functions for each particular application, but it should not be considered that the implementation goes beyond the scope of this application.

It may be clearly understood by a person of ordinaᵣy skill in the art that, for a purpose of convenient and brief descriptions, for a detailed working process of the foregoing system, apparatus and unit, refer to a corresponding process in the foregoing method embodiments. Details are not described herein again.

In the several embodiments provided in this application, it should be understood that the disclosed apparatuses and methods may be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical form or another form.

The units described as separate parts may or may not be physically separate, and parts displayed as units may or may not be physical units, may be located in one position, or may be distributed on a plurality of network units. Some or all of the units may be selected based on an actual requirement to achieve an objective of the solutions of embodiments in this application.

In addition, the processing units in the embodiments of this application may be dispersed in a plurality of function units, or may be integrated into one processing unit. Each of the units may exist alone physically, or two or more units may be integrated into one unit. The integrated unit may be implemented in a form of hardware, or may be implemented in a form of a software functional unit.

All or some of the foregoing embodiments may be implemented by using software, hardware, firmware, or any combination thereof. When software, firmware or a combination of software and hardware is used to implement embodiments, all or some of the embodiments may be implemented in a form of a computer program product. The computer program product includes one or more computer program instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any medium that can be accessed by a computer, or may be a data storage device, such as a server or a data center, into which one or more media are integrated. The medium may be a magnetic medium (for example, a floppy disk, a hard disk, or a magnetic tape), an optical medium (for example, an optical disc), a semiconductor medium (for example, a solid-state drive), or the like.

## Claims

1. A packet processing method, applied to a segment routing network, wherein the method comprises:
receiving (S103), by a first network device, a first packet, wherein the first packet comprises a plurality of segment identifier, SID, lists, the plurality of SID lists comprise a primary SID list and at least one secondary SID list, the at least one secondary SID list comprises a first secondary SID list, and the first secondary SID list is a backup of the primary SID list; and
processing, by the first network device, the first packet based on the primary SID list;
wherein the processing, by the first network device, the first packet based on the primary SID list is **characterized by**:
performing (S104), by the first network device, different processing on the first packet based on whether a target SID is available, wherein the target SID is one or more unexecuted SIDs in the primary SID list, and wherein the target SID being available includes that a service corresponding to the target SID is available, or the target SID is reachable for the first network device.

2. The method according to claim 1, wherein the first secondary SID list being a backup of the primary SID list comprises that a forwarding path indicated by the first secondary SID list is a backup path of a forwarding path indicated by the primary SID list.

3. The method according to claim 2, wherein the target SID being available comprises that a network device corresponding to the target SID is reachable for the first network device.

4. The method according to claim 2 or 3, wherein processing, by the first network device, the first packet when the target SID is unavailable comprises:
sending, by the first network device, the first packet based on a first SID, wherein the first SID is the 1^{st} SID in the first secondary SID list.

5. The method according to claim 2 or 3, wherein the first network device is an intermediate node on an end-to-end primary forwarding path indicated by the plurality of SID lists, the target SID is the last SID in the primary SID list, and the target SID is a SID of the first network device; and
processing, by the first network device, the first packet when the target SID is available comprises:
sending, by the first network device, the first packet based on a first SID, wherein the first SID is the 1^{st} SID after the at least one secondary SID list in the plurality of SID lists.

6. The method according to any one of claims 2 to 4, wherein the first network device is a tail node on an end-to-end primary forwarding path indicated by the plurality of SID lists, the target SID is the last SID in the primary SID list, and the target SID is a SID of the first network device; and
processing, by the first network device, the first packet when the target SID is available comprises:
performing, by the first network device, a function corresponding to the target SID, and stripping the plurality of SID lists.

7. The method according to claim 1, wherein the first secondary SID list being a backup of the primary SID list comprises that a service corresponding to the first secondary SID list is a backup of a service corresponding to the primary SID list, and the target SID being available comprises that a service corresponding to the target SID is available.

8. The method according to claim 7, wherein processing, by the first network device, the first packet when the target SID is unavailable comprises:
providing, by the first network device, a service corresponding to a first SID for the first packet based on the first SID, wherein the first SID is the 1^{st} SID in the first secondary SID list.

9. The method according to claim 7, wherein the first network device is an intermediate node on an end-to-end primary forwarding path indicated by the plurality of SID lists, the target SID is the 1^{st} SID in the unexecuted SIDs, and processing, by the first network device, the first packet when the target SID is available comprises:
providing, by the first network device, the service corresponding to the target SID, and sending the first packet based on a first SID, wherein the first SID is the 1^{st} SID after the at least one secondary SID list in the plurality of SID lists.

10. The method according to claim 7 or 8, wherein the first network device is a tail node on an end-to-end primary forwarding path indicated by the plurality of SID lists, the target SID is the last SID in the unexecuted SIDs, and processing, by the first network device, the first packet when the target SID is available comprises:
providing, by the first network device, the service corresponding to the target SID, and stripping the plurality of SID lists.

11. The method according to any one of claims 4, 5, 8, and 9, wherein the first packet comprises location indication information, and the method further comprises:
obtaining, by the first network device, the first SID based on the location indication information, wherein the location indication information is used to indicate one or more of the following: a location of the primary SID list in the plurality of SID lists, a location of the first secondary SID list in the plurality of SID lists, and a location of the at least one secondary SID list in the plurality of SIDs.

12. The method according to any one of claims 1 to 11, wherein before the processing, by the first network device, the first packet based on the primary SID list, the method further comprises:
receiving, by the first network device, a configuration instruction; and
performing, by the first network device based on the configuration instruction, an action of obtaining a second SID based on whether the target SID is available, and processing the first packet based on the second SID, wherein the second SID comprises a SID in the primary SID list, the 1^{st} SID in the first secondary SID list, or the 1^{st} SID after the at least one secondary SID list in the plurality of SID lists.

13. The method according to any one of claims 1 to 12, wherein the plurality of SID lists are in a segment routing header SRH of the first packet, or the plurality of SID lists are in a multi-protocol label switching header of the first packet.

14. The method according to any one of claims 1 to 13, wherein the primary SID list and the first secondary SID list are in different SRHs of the first packet.

15. The method according to any one of claims 1 to 14, wherein the primary SID list is adjacent to the first secondary SID list, and the last SID in the primary SID list is before the first secondary SID list.

16. The method according to any one of claims 1 to 15, wherein
the at least one secondary SID list further comprises a second secondary SID list, and the second secondary SID list is a backup of the first secondary SID list and/or the second secondary SID list is a backup of the primary SID list.

17. The method according to any one of claims 1 to 16, wherein the plurality of SID lists further comprise another primary SID list and another secondary SID list, and the another secondary SID list is a backup of the another primary SID list.

18. A network device, wherein the network device is configured to implement the method according to any one of claims 1 to 17.

19. A network system, comprising a network device, wherein the network device is configured to implement the method according to any one of claims 1 to 17.

## Patentansprüche

1. Paketverarbeitungsverfahren, angewendet auf ein Segment-Routing-Netzwerk, wobei das Verfahren umfasst:
Empfangen (S103) eines ersten Pakets durch eine erste Netzwerkvorrichtung, wobei das erste Paket eine Vielzahl von Segmentkennungslisten, SID-Listen, umfasst, die Vielzahl von SID-Listen eine primäre SID-Liste und wenigstens eine sekundäre SID-Liste umfasst, die wenigstens eine sekundäre SID-Liste eine erste sekundäre SID-Liste umfasst und die erste sekundäre SID-Liste ein Backup der primären SID-Liste ist; und
Verarbeiten des ersten Pakets durch die erste Netzwerkvorrichtung basierend auf der primären SID-Liste;
wobei das Verarbeiten des ersten Pakets durch die erste Netzwerkvorrichtung basierend auf der primären SID-Liste **gekennzeichnet ist durch**:
Durchführen (S104) unterschiedlicher Verarbeitung an dem ersten Paket **durch** die erste Netzwerkvorrichtung basierend darauf, ob eine Ziel-SID verfügbar ist, wobei die Ziel-SID eine oder mehrere nicht ausgeführte SIDs in der primären SID-Liste ist und wobei das Verfügbarsein der Ziel-SID beinhaltet, dass ein Dienst, der der Ziel-SID entspricht, verfügbar ist oder die Ziel-SID für die erste Netzwerkvorrichtung erreichbar ist.

2. Verfahren nach Anspruch 1, wobei das Backup-Sein der ersten sekundären SID-Liste für die primäre SID-Liste umfasst, dass ein Weiterleitungspfad, der durch die erste sekundäre SID-Liste angezeigt wird, ein Backup-Pfad eines Weiterleitungspfades ist, der durch die primäre SID-Liste angezeigt wird.

3. Verfahren nach Anspruch 2, wobei das Verfügbarsein der Ziel-SID umfasst, dass eine Netzwerkvorrichtung, die der Ziel-SID entspricht, für die erste Netzwerkvorrichtung erreichbar ist.

4. Verfahren nach Anspruch 2 oder 3, wobei Verarbeiten des ersten Pakets durch die erste Netzwerkvorrichtung, wenn die Ziel-SID nicht verfügbar ist, umfasst:
Senden des ersten Pakets durch die erste Netzwerkvorrichtung basierend auf einer ersten SID, wobei die erste SID die 1. SID in der ersten sekundären SID-Liste ist.

5. Verfahren nach Anspruch 2 oder 3, wobei die erste Netzwerkvorrichtung ein Zwischenknoten auf einem Ende-zu-Ende-Primärweiterleitungspfad ist, der durch die Vielzahl von SID-Listen angezeigt wird, die Ziel-SID die letzte SID in der primären SID-Liste ist und die Ziel-SID eine SID der ersten Netzwerkvorrichtung ist; und
Verarbeiten des ersten Pakets durch die erste Netzwerkvorrichtung, wenn die Ziel-SID verfügbar ist, umfasst: Senden des ersten Pakets durch die erste Netzwerkvorrichtung basierend auf einer ersten SID, wobei die erste SID die 1. SID nach der wenigstens einen sekundären SID-Liste in der Vielzahl von SID-Listen ist.

6. Verfahren nach einem der Ansprüche 2 bis 4, wobei die erste Netzwerkvorrichtung ein Endknoten auf einem Ende-zu-Ende-Primärweiterleitungspfad ist, der durch die Vielzahl von SID-Listen angezeigt wird, die Ziel-SID die letzte SID in der primären SID-Liste ist und die Ziel-SID eine SID der ersten Netzwerkvorrichtung ist; und
Verarbeiten des ersten Pakets durch die erste Netzwerkvorrichtung, wenn die Ziel-SID verfügbar ist, umfasst: Durchführen einer Funktion, die der Ziel-SID entspricht, und Entfernen der Vielzahl von SID-Listen durch die erste Netzwerkvorrichtung.

7. Verfahren nach Anspruch 1, wobei das Backup-Sein der ersten sekundären SID-Liste für die primäre SID-Liste umfasst, dass ein Dienst, der der ersten sekundären SID-Liste entspricht, ein Backup eines Dienstes ist, der der primären SID-Liste entspricht, und das Verfügbarsein der Ziel-SID umfasst, dass ein Dienst, der der Ziel-SID entspricht, verfügbar ist.

8. Verfahren nach Anspruch 7, wobei Verarbeiten des ersten Pakets durch die erste Netzwerkvorrichtung, wenn die Ziel-SID nicht verfügbar ist, umfasst:
Bereitstellen eines Dienstes, der einer ersten SID entspricht, für das erste Paket durch die erste Netzwerkvorrichtung basierend auf der ersten SID, wobei die erste SID die 1. SID in der ersten sekundären SID-Liste ist.

9. Verfahren nach Anspruch 7, wobei die erste Netzwerkvorrichtung ein Zwischenknoten auf einem Ende-zu-Ende-Primärweiterleitungspfad ist, der durch die Vielzahl von SID-Listen angezeigt wird, die Ziel-SID die 1. SID in den nicht ausgeführten SIDs ist und Verarbeiten des ersten Pakets durch die erste Netzwerkvorrichtung, wenn die Ziel-SID verfügbar ist, umfasst:
Bereitstellen des Dienstes, der der Ziel-SID entspricht, und Senden des ersten Pakets basierend auf einer ersten SID durch die erste Netzwerkvorrichtung, wobei die erste SID die 1. SID nach der wenigstens einen sekundären SID-Liste in der Vielzahl von SID-Listen ist.

10. Verfahren nach Anspruch 7 oder 8, wobei die erste Netzwerkvorrichtung ein Endknoten auf einem Ende-zu-Ende-Primärweiterleitungspfad ist, der durch die Vielzahl von SID-Listen angezeigt wird, die Ziel-SID die letzte SID in den nicht ausgeführten SIDs ist und Verarbeiten des ersten Pakets durch die erste Netzwerkvorrichtung, wenn die Ziel-SID verfügbar ist, umfasst:
Bereitstellen des Dienstes, der der Ziel-SID entspricht, und Entfernen der Vielzahl von SID-Listen durch die erste Netzwerkvorrichtung.

11. Verfahren nach einem der Ansprüche 4, 5, 8 und 9, wobei das erste Paket Standortanzeigeinformationen umfasst und das Verfahren ferner umfasst:
Erhalten der ersten SID durch die erste Netzwerkvorrichtung basierend auf den Standortanzeigeinformationen, wobei die Standortanzeigeinformationen verwendet werden, um eines oder mehrere des Folgenden anzuzeigen: einen Standort der primären SID-Liste in der Vielzahl von SID-Listen, einen Standort der ersten sekundären SID-Liste in der Vielzahl von SID-Listen und einen Standort der wenigstens einen sekundären SID-Liste in der Vielzahl von SIDs.

12. Verfahren nach einem der Ansprüche 1 bis 11, wobei vor dem Verarbeiten des ersten Pakets durch die erste Netzwerkvorrichtung basierend auf der primären SID-Liste das Verfahren ferner umfasst:
Empfangen einer Konfigurationsanweisung durch die erste Netzwerkvorrichtung; und
Durchführen einer Aktion des Erhaltens einer zweiten SID durch die erste Netzwerkvorrichtung basierend auf der Konfigurationsanweisung basierend darauf, ob die Ziel-SID verfügbar ist, und Verarbeiten des ersten Pakets basierend auf der zweiten SID, wobei die zweite SID eine SID in der primären SID-Liste, die 1. SID in der ersten sekundären SID-Liste oder die 1. SID nach der wenigstens einen sekundären SID-Liste in der Vielzahl von SID-Listen umfasst.

13. Verfahren nach einem der Ansprüche 1 bis 12, wobei die Vielzahl von SID-Listen in einem Segment-Routing-Header SRH des ersten Pakets sind oder die Vielzahl von SID-Listen in einem Multiprotokoll-Label-Switching-Header des ersten Pakets sind.

14. Verfahren nach einem der Ansprüche 1 bis 13, wobei die primäre SID-Liste und die erste sekundäre SID-Liste in unterschiedlichen SRHs des ersten Pakets sind.

15. Verfahren nach einem der Ansprüche 1 bis 14, wobei die primäre SID-Liste benachbart zu der ersten sekundären SID-Liste ist und die letzte SID in der primären SID-Liste vor der ersten sekundären SID-Liste ist.

16. Verfahren nach einem der Ansprüche 1 bis 15, wobei die wenigstens eine sekundäre SID-Liste ferner eine zweite sekundäre SID-Liste umfasst und die zweite sekundäre SID-Liste ein Backup der ersten sekundären SID-Liste ist und/oder die zweite sekundäre SID-Liste ein Backup der primären SID-Liste ist.

17. Verfahren nach einem der Ansprüche 1 bis 16, wobei die Vielzahl von SID-Listen ferner eine andere primäre SID-Liste und eine andere sekundäre SID-Liste umfasst und die andere sekundäre SID-Liste ein Backup der anderen primären SID-Liste ist.

18. Netzwerkvorrichtung, wobei die Netzwerkvorrichtung konfiguriert ist, um das Verfahren nach einem der Ansprüche 1 bis 17 zu implementieren.

19. Netzwerksystem, umfassend eine Netzwerkvorrichtung, wobei die Netzwerkvorrichtung konfiguriert ist, um das Verfahren nach einem der Ansprüche 1 bis 17 zu implementieren.

## Revendications

1. Procédé de traitement de paquets, appliqué à un réseau à routage de segments, dans lequel le procédé comprend :
la réception (S103), par un premier dispositif réseau, d'un premier paquet, dans lequel premier paquet comprend une pluralité de listes d'identificateurs de segment (SID), la pluralité de listes SID comprend une liste SID principale et au moins une liste SID secondaire, l'au moins une liste SID secondaire comprend une première liste SID secondaire, et la première liste SID secondaire est une sauvegarde de la liste SID principale ; et
le traitement, par le premier dispositif réseau, du premier paquet sur la base de la liste SID principale ;
dans lequel le traitement, par le premier dispositif réseau, du premier paquet sur la base de la liste SID principale est **caractérisé par** :
la réalisation (S104), par le premier dispositif réseau, d'un traitement différent sur le premier paquet sur la base de la disponibilité d'un SID cible, dans lequel le SID cible est un ou plusieurs SID non exécutés dans la liste SID principale, et dans lequel la disponibilité du SID cible comporte qu'un service correspondant au SID cible est disponible, ou que le SID cible est accessible pour le premier dispositif réseau.

2. Procédé selon la revendication 1, dans lequel la première liste SID secondaire étant une sauvegarde de la liste SID principale comprend qu'un chemin de transfert indiqué par la première liste SID secondaire est un chemin de sauvegarde d'un chemin de transfert indiqué par la liste SID principale.

3. Procédé selon la revendication 2, dans lequel le SID cible étant disponible comprend qu'un dispositif réseau correspondant au SID cible est accessible pour le premier dispositif réseau.

4. Procédé selon la revendication 2 ou 3, dans lequel le traitement, par le premier dispositif réseau, du premier paquet lorsque le SID cible est indisponible comprend :
l'envoi, par le premier dispositif réseau, du premier paquet sur la base d'un premier SID, dans lequel le premier SID est le 1^{er} SID de la première liste SID secondaire.

5. Procédé selon la revendication 2 ou 3, dans lequel le premier dispositif réseau est un nœud intermédiaire sur un chemin de transfert principal de bout en bout indiqué par la pluralité de listes SID, le SID cible est le dernier SID de la liste SID principale, et le SID cible est un SID du premier dispositif réseau ; et
le traitement, par le premier dispositif réseau, du premier paquet lorsque le SID cible est disponible comprend :
l'envoi, par le premier dispositif réseau, du premier paquet sur la base d'un premier SID, dans lequel le premier SID est le 1^{er} SID après l'au moins une liste SID secondaire dans la pluralité de listes SID.

6. Procédé selon l'une quelconque des revendications 2 à 4, dans lequel le premier dispositif réseau est un nœud terminal sur un chemin de transfert principal de bout en bout indiqué par la pluralité de listes SID, le SID cible est le dernier SID de la liste SID principale, et le SID cible est un SID du premier dispositif réseau ; et
le traitement, par le premier dispositif réseau, du premier paquet lorsque le SID cible est disponible comprend :
la réalisation, par le premier dispositif réseau, d'une fonction correspondant au SID cible, et la suppression de la pluralité de listes SID.

7. Procédé selon la revendication 1, dans lequel la première liste SID secondaire étant une sauvegarde de la liste SID principale comprend qu'un service correspondant à la première liste SID secondaire est une sauvegarde d'un service correspondant à la liste SID principale, et le SID cible étant disponible comprend qu'un service correspondant au SID cible est disponible.

8. Procédé selon la revendication 7, dans lequel le traitement, par le premier dispositif réseau, du premier paquet lorsque le SID cible est indisponible comprend :
la fourniture, par le premier dispositif réseau, d'un service correspondant à un premier SID pour le premier paquet basé sur le premier SID, dans lequel le premier SID est le 1^{er} SID de la première liste SID secondaire.

9. Procédé selon la revendication 7, dans lequel le premier dispositif réseau est un nœud intermédiaire sur un chemin de transfert principal de bout en bout indiqué par la pluralité de listes SID, le SID cible est le 1^{er} SID dans les SID non exécutés, et le traitement, par le premier dispositif réseau, du premier paquet lorsque le SID cible est disponible comprend ;
la fourniture, par le premier dispositif réseau, du service correspondant au SID cible, et l'envoi du premier paquet sur la base d'un premier SID, dans lequel le premier SID est le 1^{er} SID après l'au moins une liste SID secondaire dans la pluralité de listes SID.

10. Procédé selon la revendication 7 ou 8, dans lequel le premier dispositif réseau est un nœud terminal sur un chemin de transfert principal de bout en bout indiqué par la pluralité de listes SID, le SID cible est le dernier SID dans les SID non exécutés, et le traitement, par le premier dispositif réseau, du premier paquet lorsque le SID cible est disponible comprend : la fourniture, par le premier dispositif réseau, du service correspondant au SID cible et la suppression de la pluralité de listes SID.

11. Procédé selon l'une quelconque des revendications 4, 5, 8 et 9, dans lequel le premier paquet comprend des informations d'indication de localisation, et le procédé comprend également : l'obtention, par le premier dispositif réseau, du premier SID basé sur les informations d'indication de localisation, dans lequel les informations d'indication de localisation sont utilisées pour indiquer l'un ou plusieurs d'un emplacement de la liste SID principale dans la pluralité de listes SID, d'un emplacement de la première liste SID secondaire dans la pluralité de listes SID et d'un emplacement de l'au moins une liste SID secondaire dans la pluralité de SID.

12. Procédé selon l'une quelconque des revendications 1 à 11, dans lequel, avant le traitement, par le premier dispositif réseau, du premier paquet basé sur la liste SID principale, le procédé comprend également :
la réception, par le premier dispositif réseau, d'une instruction de configuration ; et
la réalisation, par le premier dispositif réseau sur la base de l'instruction de configuration, d'une action consistant à obtenir un second SID sur la base de la disponibilité du SID cible, et le traitement du premier paquet sur la base du second SID, dans lequel le second SID comprend un SID de la liste SID principale, le 1^{er} SID de la première liste SID secondaire, ou le 1^{er} SID après l'au moins une liste SID secondaire dans la pluralité de listes SID.

13. Procédé selon l'une quelconque des revendications 1 à 12, dans lequel la pluralité de listes SID se trouve dans un en-tête de routage de segment SRH du premier paquet, ou la pluralité de listes SID se trouve dans un en-tête de commutation d'étiquettes multiprotocole du premier paquet.

14. Procédé selon l'une quelconque des revendications 1 à 13, dans lequel la liste SID principale et la première liste SID secondaire se trouvent dans des SRH différents du premier paquet.

15. Procédé selon l'une quelconque des revendications 1 à 14, dans lequel la liste SID principale est adjacente à la première liste SID secondaire, et le dernier SID de la liste SID principale est avant la première liste SID secondaire.

16. Procédé selon l'une quelconque des revendications 1 à 15, dans lequel
l'au moins une liste SID secondaire comprend également une seconde liste SID secondaire, et la seconde liste SID secondaire est une sauvegarde de la première liste SID secondaire et/ou la seconde liste SID secondaire est une sauvegarde de la liste SID principale.

17. Procédé selon l'une quelconque des revendications 1 à 16, dans lequel la pluralité de listes SID comprend également une autre liste SID principale et une autre liste SID secondaire, et l'autre liste SID secondaire est une sauvegarde de l'autre liste SID principale.

18. Dispositif réseau, dans lequel le dispositif réseau est configuré pour mettre en œuvre le procédé selon l'une quelconque des revendications 1 à 17.

19. Système réseau, comprenant un dispositif réseau, dans lequel le dispositif réseau est configuré pour mettre en œuvre le procédé selon l'une quelconque des revendications 1 à 17.
